# EUROPEAN PATENT APPLICATION

(11) **EP 4 790 858 A1**
(43) Date of publication of application: **12.08.2026**
(21) Application number: 26152571.1
(22) Date of filing: 19.01.2026
(51) Int. Cl.: H02H 1/04, H02H 3/08

(54) **SYSTEMS AND METHODS FOR DIFFERENTIATING BETWEEN INRUSH CURRENT AND SHORT CIRCUIT CURRENT**

(30) Priority: 27.01.2025 US 202519038310
(71) Applicant: Rockwell Automation Technologies, Inc., Mayfield Heights, OH 44124 (US)
(72) Inventor: David, Chloe, Mayfield Heights, OH 44124 (US); Elmiger, David, Mayfield Heights, OH 44124 (US); Kerim, Aiman, Mayfield Heights, OH 44124 (US); Adkins, Kyle B., Mayfield Heights, OH 44124 (US); Carlson, Andrew E., Mayfield Heights, OH 44124 (US)
(74) Representative: Grünecker Patent- und Rechtsanwälte PartG mbB

(57) **Abstract**

Described herein are methods and systems for efficiently and accurately distinguishing between the current characteristics associated with inrush current and the current characteristics associated with a short circuit. In particular, the techniques described herein allow a circuit breaking system (also referred to as a circuit breaking device) to tolerate the conditions associated with inrush current while maintaining the ability to detect and responsively mitigate conditions associated with a short circuit. In some cases, the circuit breaking system evaluates the current characteristics of an input signal generated by a power supply in order to drive an industrial device, such as a motor. In such cases, the circuit breaking system acts as an intermediary between the power supply and the industrial device, and under certain circumstances, the circuit breaking system interrupts the flow of electrical energy (i.e., the input signal) to the industrial device, thereby tripping the circuit breaking system.

## Description

### BACKGROUND

Industrial devices, such as motors, are regularly used in a wide variety of commercial and industrial contexts. When such a device first begins to receive electrical energy during a start-up procedure, it may experience an inrush current. In other words, the peak current values can reach relatively high values for short periods of time before settling to lower peak values associated with steady-state operation of the given device.

In some cases, inrush current can be many times greater than the current values expected during a device's steady-state operation. Despite the potentially large amperage, inrush current is a common issue associated with starting many kinds of industrial devices. Accordingly, inrush current should not be cause for tripping a circuit breaker.

Short circuits, on the other hand, are to be always avoided as they can create substantial risk of harm for nearby humans, the connected industrial devices, and other devices ancillary to the connected industrial devices. A short circuit generally describes a scenario where an unintentional and low-resistance conductive path is created, allowing excessive current to flow through a circuit. Short circuits can occur for many reasons including due to conductors having damaged insulation, loose connections, overloaded circuits, the presence of moisture, contact with conductive debris, and other such circumstances. In short circuit scenarios, conductive elements and other components of an industrial device can be subject to much greater amperage than otherwise anticipated, which can result in melted conductive elements, burnt components, and even irreparable damage to the industrial device that may render it inoperable.

To avoid damage associated with short circuits, circuit breakers are often coupled to industrial devices and configured to trip, breaking the circuit when a short circuit occurs. Unfortunately, the current characteristics associated with inrush current and the current characteristics associated with a short circuit can appear very similar. Since inrush current and short circuits appear similar, they are difficult to distinguish, and circuit breakers may trip based on either. This is undesirable since the industrial device needs to make it through startup inrush currents to reach steady state operation.

As such, techniques for efficiently and accurately distinguishing between the current characteristics associated with inrush current and the current characteristics associated with a short circuits are needed.

### SUMMARY

Described herein are methods and systems for efficiently and accurately distinguishing between the current characteristics associated with inrush current and the current characteristics associated with a short circuit. In particular, the techniques described herein allow a circuit breaking system (also referred to as a circuit breaking device) to tolerate the conditions associated with inrush current while maintaining the ability to detect and responsively mitigate conditions associated with a short circuit. In some cases, the circuit breaking system evaluates the current characteristics of an input signal generated by a power supply in order to drive an industrial device, such as a motor. In such cases, the circuit breaking system acts as an intermediary between the power supply and the industrial device, and under certain circumstances, the circuit breaking system can interrupt the flow of electrical energy to the industrial device (i.e., the circuit breaking system trips).

To successfully differentiate between inrush current conditions and short circuit conditions, a number of algorithms are disclosed. The algorithm selected may be based on the operational environment and context in which the circuit breaking system executing the algorithm will be deployed. Each of the algorithms can be deployed as executable instructions that, when executed by a processor of the circuit breaking system, direct the processor to act in accordance with the given algorithm. The algorithms evaluate some combination of instantaneous current values, rate of change values (i.e., slope values), and timing characteristics associated with the current values and rate of change values to detect short circuit conditions while tolerating inrush current conditions.

To implement a method of distinguishing between inrush current and short circuit current, a current threshold of a circuit breaking device is first set prior to the startup of a motor set such that the current threshold exceeds an expected inrush current value. Based on an expiration of an inrush time window after the startup of the motor, the current threshold of the circuit breaking device is lowered to a runtime threshold value. Upon the startup of the motor, a current draw of the motor at the circuit breaking device is measured. The circuit breaking device is then tripped in response to the measured current draw exceeding the current threshold.

In some cases, the inrush time window is greater than fifteen milliseconds but less than thirty-five milliseconds. In some cases, setting the current threshold of the circuit breaking device to exceed the expected inrush current value includes setting the current threshold to exceed the expected inrush current value by more than two-hundred and fifty milliamperes and less than two amperes.

To implement another method of distinguishing between inrush current and short circuit current, a current draw of the motor is measured at a circuit breaking device. Based on the current draw, a slope of the current draw that defines a change in the current draw over time is calculated. The circuit breaking device is tripped based at least in part on detecting the slope of the current draw exceeds a slope threshold for a predetermined time period.

In some cases, tripping the circuit breaking device is further based at least in part on detecting the current draw exceeds a current threshold for the predetermined time period. In some cases, the predetermined time period is greater than four microseconds and less than six microseconds. In some cases, the slope threshold is greater than forty amperes per microsecond and less than seventy amperes per microsecond.

To implement another method of distinguishing between inrush current and short circuit current, a current draw of the motor is measured at a circuit breaking device. Based on the current draw, a slope of the current draw that defines a change in the current draw over time is calculated. The circuit breaking device is tripped based at least in part on detecting the slope of the current draw exceeds a slope threshold and the current draw exceeds a current threshold simultaneously.

To implement a circuit breaking system for distinguishing between inrush current and short circuit current, a current sensor is first configured to measure current draw of a load coupled to the circuit breaking system. The circuit breaking system includes one or more processors and one or more memories storing components executable by the one or more processors. The components include a critical current threshold component configured to trip the circuit breaking system based on the current draw exceeding a first current threshold, and a critical slope threshold component configured to calculate a slope of the current draw and to trip the circuit breaking system based on both the slope exceeding a slope threshold and the current draw exceeding a second current threshold simultaneously for a predetermined time period. In some cases, the second current threshold is less than the first current threshold.

In some cases, the first current threshold is greater than fifteen times a nominal current draw of the load associated with the circuit breaking system.

### BRIEF DESCRIPTION OF THE DRAWINGS

Many aspects of the disclosure can be better understood with reference to the following drawings. The components in the drawings are not necessarily drawn to scale. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates an operational environment in accordance with some embodiments of the present technology.
Figure 2A illustrates a circuit breaking system in detail in accordance with some embodiments of the present technology.
Figure 2B illustrates another circuit breaking system in detail in accordance in accordance with some embodiments of the present technology.
Figure 2C illustrates another circuit breaking system in detail in accordance with some embodiments of the present technology.
Figure 2D illustrates another circuit breaking system in detail in accordance with some embodiments of the present technology.
Figure 3A illustrates a signal plot in accordance with some embodiments of the present technology.
Figure 3B illustrates a method in accordance with some embodiments of the present technology.
Figure 4A illustrates signal plots in accordance with some embodiments of the present technology.
Figure 4B illustrates a further method in accordance with some embodiments of the present technology.
Figure 5A illustrates further signal plots in accordance with some embodiments of the present technology.
Figure 5B illustrates a further method in accordance with some embodiments of the present technology.
Figure 6A illustrates further signal plots in accordance with some embodiments of the present technology.
Figure 6B illustrates a further method in accordance with some embodiments of the present technology.
Figure 7A illustrates further signal plots in accordance with some embodiments of the present technology.
Figure 7B illustrates further signal plots in accordance with some embodiments of the present technology.
Figure 7C illustrates a further method in accordance with some embodiments of the present technology.
Figure 8 illustrates a computing system used in accordance with some embodiments of the present technology.

### DETAILED DESCRIPTION

Disclosed herein are methods and systems for efficiently and accurately distinguishing between the current characteristics associated with inrush current and the current characteristics associated with a short circuit. In particular, the techniques described herein allow a circuit breaking system (also referred to as a circuit breaking device) to tolerate the conditions associated with inrush current while maintaining the ability to detect and responsively mitigate conditions associated with a short circuit.

In some embodiments, the circuit breaking system includes circuitry that facilitates the flow of electrical energy via an input signal generated by a power supply to a motor load, a current sensor for detecting instantaneous current values of the input signal, one or more processors, and one or more memories storing a dynamic critical current component. In some embodiments, the dynamic critical current component is executable instructions that can be executed by the processor. The dynamic critical current component, when executed, directs the processor of the circuit breaking system to establish and revise dynamic current limits. The current limits can be made higher to briefly allow for inrush current and then subsequently lowered to preserve the ability to detect short circuit conditions. Where the circuit breaking system detects that the dynamic current threshold has been exceeded, the circuit breaking system trips (i.e., disrupts the flow of electrical energy to the motor load). In some scenarios, a pulse of electrical energy is supplied to the motor via the circuit breaking system. In response to the pulse, an inrush current draw of the motor is measured. The initial, and higher, of the current limits can then be determined at least in part based on the inrush current draw. In some scenarios, the initial and higher of the current limits is set to a default expected inrush current. In some scenarios, the subsequent and lower current limit is set to a default runtime value.

In some embodiments, the initial and higher of the current limits (i.e., the current threshold associated with the expected inrush current) is set to an application specific value. The application specific value is a value that corresponds to a particular use-case (i.e., application). There may be any number of application specific values, each corresponding to a different use case. In such embodiments, each application specific value is based at least in part on one or more characteristics of the motor, one or more characteristics of the application, or a combination thereof. For example, where the motor has a relatively low internal resistance, a higher inrush current can be expected, and therefore a higher application specific value is used for the expected inrush current value.

In some embodiments, the circuit breaking system includes circuitry that facilitates the flow of electrical energy via an input signal generated by a power supply to a motor load, a current sensor for detecting instantaneous current values of the input signal, one or more processors, and one or more memories storing a critical slope component and a timing component. In some embodiments, the critical slope component and the timing component are executable instructions that can be executed by the processor. The critical slope component and the timing component, when each executed, direct the processor of the circuit breaking system to evaluate instantaneous current values and to determine slope values from the instantaneous current values. Where the circuit breaking system detects that a slope value has exceeded a slope threshold, the circuit breaking system begins timing a predetermined time period. Where the circuit breaking system determines that the slope values have exceeded the slope threshold for the entirety of the predetermined time period, the circuit breaking system trips (i.e., disrupts the flow of electrical energy to the motor load).

In some embodiments, the motor is driven by a multi-phase input signal. The multi-phase input signal may include any number of phases. For example, the multi-phase input signal may be a three-phase input signal. In such embodiments, a phase-specific current draw is determined for each phase of the multi-phase input signal. A phase-specific slope is calculated for each phase-specific current draw. Based on the phase-specific slope for each phase-specific current draw, it can be detected where a phase-specific current draw of one or more phases of the multi-phase input signal exceeds the slope threshold. In some embodiments, where one or more phases of the multi-phase input signal exceeds the slope threshold, the circuit breaking system is tripped. In some embodiments, where two or more phases of the multi-phase input signal exceeds the slope threshold, the circuit breaking system is tripped.

In some embodiments, the circuit breaking system includes circuitry that facilitates the flow of electrical energy via an input signal generated by a power supply to a motor load, a current sensor for detecting instantaneous current values of the input signal, one or more processors, and one or more memories storing a critical current component and a critical slope component. In some embodiments, the critical current component and the critical slope component are executable instructions that can be executed by the processor. The critical current component and the critical slope component, when each executed, direct the processor of the circuit breaking system to evaluate instantaneous current values and to determine slope values from the instantaneous current values. Where the circuit breaking system determines that the current values have exceeded the current threshold, that the slope values have exceeded the slope threshold, and that the current values and slope values exceeded the respective thresholds simultaneously, the circuit breaking system trips (i.e., disrupts the flow of electrical energy to the motor load). In some embodiments, the circuit breaking device comprises one or more noise removal filters. In such embodiments, measuring the current draw of the motor at the circuit breaking device comprises filtering a current draw signal with the one or more noise removal filters and subsequently determining the current draw from the filtered current signal. For example, the one or more noise removal filters may include a moving median filter, a moving average filter, a lowpass filter, a Savitzky-Golay filter, a Kalman filter, or any other suitable signal processing filter sufficient to reduce noise on a signal.

In some embodiments, the circuit breaking system includes circuitry that facilitates the flow of electrical energy via an input signal generated by a power supply to a motor load, a current sensor for detecting instantaneous current values of the input signal, one or more processors, and one or more memories storing a critical current component, a critical slope component, and a timing component. In some embodiments, the critical current component, critical slope component, and timing component are executable instructions that can be executed by the processor. The critical current component, critical slope component, and timing component, when each executed, direct the processor of the circuit breaking system to evaluate instantaneous current values and to determine slope values from the instantaneous current values. Where the circuit breaking system detects that a current value has exceeded a current threshold, the circuit breaking system begins timing a predetermined time period associated with the current values. Similarly, where the circuit breaking system detects that a slope value has exceeded a slope threshold, the circuit breaking system begins timing a predetermined time period associated with the slope values. Should the circuit breaking system determine that the current values have exceeded the current threshold for the entirety of the predetermined time period, that the slope values have exceeded the slope threshold for the entirety of the predetermined time period, and that the current values and slope values exceeded the respective thresholds simultaneously, the circuit breaking system trips (i.e., disrupts the flow of electrical energy to the motor load).

In some such embodiments, the critical slope component provides a second path by which a trip of the circuit breaking system may be triggered. In addition to a tripping of the circuit breaking system in response to both the current values and the slope values simultaneously exceeding the respective thresholds for an entire predetermined time period, the critical slope component may include an additional current threshold. In some cases, the additional current threshold is set higher than the initial current threshold. Where the circuit breaking system detects that a current value exceeds the additional current threshold, the circuit breaking system trips (i.e., disrupts the flow of electrical energy to the motor load).

In some embodiments, the circuit breaking system further includes a sensor coupled with the load. The sensor is configured to output voltage values that are proportionate to the change in current values for the current draw of the load coupled to the circuit breaking system. In such embodiments, the slope of the current draw for a load coupled with the circuit breaking system is determined via the output of the sensor. For example, the sensor could be various types of Rogowski coils (e.g., flexible, miniature, open-ended), certain types of air-core current transformers (e.g., air-core inductive loops, non-ferromagnetic current transformers), or other elements sufficient to output a voltage proportional to the slope of a current draw for a load coupled with the circuit breaking system.

The methods and systems described herein provide for a number of beneficial technical effects. In particular, the techniques herein facilitate the efficient and accurate differentiation of the current characteristics associated with inrush current versus the current characteristics associated with a short circuit. The enhanced ability to distinguish between inrush current and short circuit current provides an improved ability to avoid false positives in which a short circuit detection process incorrectly interprets inrush current as a short circuit and responsively interrupts the function of a device for which the detection occurred. Additionally, the enhanced ability to distinguish between inrush current and short circuit current provides an improved ability to avoid false negatives. For example, a false negative can occur where a short circuit detection process is configured with an increased current threshold (i.e., an increased critical current) to account for inrush current and a short circuit is not detected under the increased threshold. By avoiding false positives, unnecessary interruptions of industrial devices can be minimized, and the waste of resources and time can be avoided. By avoiding false negatives, undetected short circuits and the potentially catastrophic associated consequences can also be avoided.

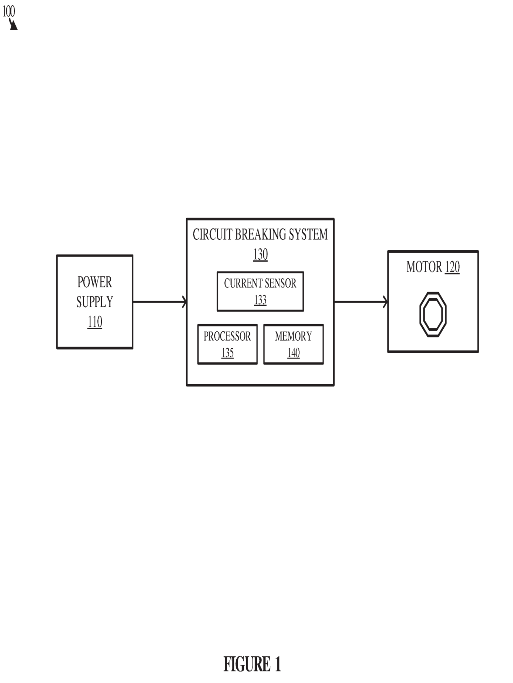

**Figure** 1 illustrates operational environment 100 in accordance with some embodiments of the present technology. Operational environment 100 is generally representative of an environment in which a circuit breaking system operates to deliver power to and diagnostically evaluate the parameters and performance of a motor. Operational environment 100 includes power supply 110, motor 120, and circuit breaking system 130. Circuit breaking system 130 further includes current sensor 133, processor 135, and memory 140.

Power supply 110 is generally representative of an industrial power source sufficient to provide the input signals required to drive an industrial load. In particular, power supply 110 is representative of a power supply sufficient to provide an input signal that drives industrial motors (e.g., motor 120). Note that in some cases, the motor may be referred to as a motor load, as the motor is effectively the load associated with the circuit breaking system. References to the motor and to the motor load are references to the same element. In some cases, there may be an additional device that itself is driven by the motor. In such cases, the motor load remains referring to the motor while other language, such as load of the motor, will be used to describe the device being driven by the motor. Power supply 110 may provide electrical energy as either alternating current or as direct current depending on the industrial application that power supply 110 is providing electrical energy for. In some cases, power supply 110 may provide electrical energy via a single signal, while in some other cases, power supply 110 provides electrical energy via multiple phase-offset signals.

Depending on what kind of electrical energy is being provided by power supply, power supply 110 may provide input signals at a wide variety of voltages, ranging from tens of volts to multiple thousands of volts. In some cases, additional circuitry is used to process the input signal produced by power supply 110 such that the input signal is appropriate for a particular application. Power supply 110 provides input signals to loads, and in particular to industrial motors, via conductive electrical couplings to those loads and industrial motors. As illustrated in Figure 1, power supply 110 is conductively coupled with circuit breaking system 130, though in other scenarios, power supply 110 may be coupled with a number of additional elements.

Motor 120 is generally representative of an industrial motor that may be used in any number of industrial applications, such as manufacturing, processing, material handling, energy production, mining, heavy industry, transportation, construction, agriculture, and infrastructure type applications. Motor 120 may be a motor driven by a direct current input signal, a single alternating current signal, or multiple alternating current signals. In some cases, motor 120 is driven by a multi-phase input signal. The multi-phase input signal may include any number of phases. For example, the multi-phase input signal may be a three-phase input signal.

While motor 120 is generally representative of an industrial motor, the advantages of circuit breaking system 130 and the techniques described herein may be applied to other kinds of industrial devices where the diagnostic differentiation of inrush current and short circuits is beneficial. Examples of such other industrial devices include lighting systems, heating and cooling systems, certain power supplies, pumps, compressors, and other types of industrial machinery.

Circuit breaking system 130 is generally representative of a circuit breaker intermediary for relaying and moderating the electrical energy produced at power supply 110 to motor 120 in order to drive motor 120. Circuit breaking system 130 may be a semiconductor circuit breaker that includes a microprocessor used to perform the algorithms described herein. Circuit breaking system 130 is conductively coupled with power supply 110 and motor 120. In particular, circuit breaking system 130 is configured to provide energy to motor 120, and to revoke the provision of such electrical energy to motor 120 under certain conditions in order to reduce risk of diminished performance of motor 120 or an associated device, damage to motor 120 or to an associated device, risk to persons, or other concerns. For example, circuit breaking system 130 is configured to detect conditions consistent with a short circuit scenario. Where circuit breaking system 130 detects conditions consistent with a short circuit scenario, circuit breaking system 130 trips (i.e., disrupts the conductive connection to motor 120 such that electrical energy no longer flows from power supply 110 to motor 120).

In some embodiments, circuit breaking system 130 is further configure to calculate instantaneous current draw values for motor 120. In such embodiments, circuit breaking system 130 may cut off the flow of electrical energy to motor 120 where the instantaneous current values exceed a current limit. In some cases, the current limit is a dynamic value. In some other embodiments, circuit breaking system 130 is further configured to calculate rate of change values (i.e., slope values) for the instantaneous current draw values of motor 120. In such embodiments, circuit breaking system 130 may cut off the flow of electrical energy to motor 120 where the slope values exceed a slope limit. In some cases, circuit breaking system 130 interrupts the flow of electrical energy to motor 120 where the slope values exceed the slope threshold for a predetermined period of time.

In some embodiments, motor 120 is driven by a multi-phase input signal. In such embodiments, phase-specific current draw values are measured for each phase of the multiphase input signal. Phase specific slope values are then calculated based on the phase-specific current draw values. Where one or more of the phase-specific slope values exceeds a slope threshold, circuit breaking system 130 may interrupt the flow of electrical energy to motor 120. In some cases, circuit breaking system 130 interrupts the flow of electrical energy to motor 120 where two or more of the phase-specific slope values exceed the slope threshold. In some cases, circuit breaking system 130 interrupts the flow of electrical energy to motor 120 where one or more phase-specific slope values exceed the slope threshold for a predetermined period of time. In some cases, circuit breaking system 130 interrupts the flow of electrical energy to motor 120 where two or more phase-specific slope values exceed the slope threshold for a predetermined period of time.

In some embodiments, circuit breaking system 130 further includes one or more noise removal filters. In such embodiments, measuring the current draw of motor 120 at circuit breaking system 130 comprises filtering a current draw signal of motor 120 with the one or more noise removal filters and subsequently determining the current draw from the filtered current signal. For example, the one or more noise removal filters may include a moving median filter, a moving average filter, a lowpass filter, a Savitzky-Golay filter, a Kalman filter, or any other suitable signal processing filter sufficient to reduce noise on a signal.

In some embodiments, circuit breaking system 130 further includes a sensor for determining the slope of the current draw for motor 120. The sensor is configured to output voltage values that are proportionate to the change in current values for the current draw of motor 120. In such embodiments, the slope of the current draw for motor 120 is determined via the output of the sensor. The sensor could be various types of Rogowski coils (e.g., flexible, miniature, open-ended), certain types of air-core current transformers (e.g., air-core inductive loops, non-ferromagnetic current transformers), or other elements sufficient to output a voltage proportional to the slope of a current draw for a load coupled with the circuit breaking system.

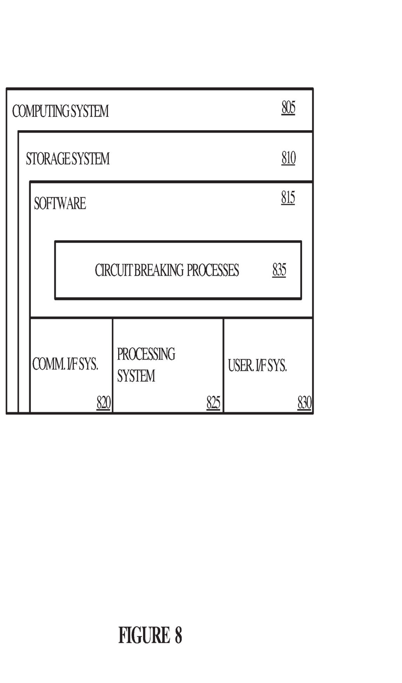

As illustrated in Figure 1, circuit breaking system 130 is implemented as a semiconductor circuit breaker, as opposed to an electromechanical circuit breaker, and includes processor 135 and memory 140. As such, circuit breaking system 130 may be considered a computing device, such as computing system 805 of Figure 8. Circuit breaking system 130 may be implemented in an industrial device such as, for example, a motor starter, a motor drive, a standalone circuit breaker, or any other suitable industrial device and standard device. In some scenarios, elements of circuit breaking system 130 may be implemented as software, firmware, hardware, or any combination thereof. Where elements of circuit breaking system 130 are implemented via software or firmware, executable instructions corresponding to such elements may be stored in a storage media, such as memory 140, and may be executed by a processor, such as processor 135.

Additionally, circuit breaking system 130 includes additional elements that allow for managing the performance of motor 120 and for diagnostically evaluating various characteristics of the performance of motor 120. Examples of such additional elements include current sensor 133, processor 135, and memory 140, though circuit breaking system 130 may include a variety of additional elements related to the management and evaluation of motor 120. Circuit breaking system 130 may include motor starting elements, soft motor starting elements, variable frequency drive elements, overload relays, and the like.

Current sensor 133 is generally representative of circuitry for assessing instantaneous current values. Current sensor 133 is conductively coupled with power supply 110 and motor 120 such that as the input signal produced by power supply 110 is relayed to motor 120, current sensor 133 can assess the current characteristics of the input signal. Current sensor 133 is further communicatively coupled with processor 135 such that as current sensor 133 identifies instantaneous current values, the values can be communicated to processor 135 for further processing. Further, current sensor 133 may provide processor 135 with a series of instantaneous current values identified at certain time intervals such that processor 135 can process the series of values and determine values for a slope (i.e., the rate of change) of the instantaneous current values. The slope values can be tracked over time and facilitate additional diagnostic evaluation of the performance of motor 120.

Processor 135 is generally representative a processing device used in a computing device, an example of which is given by processing system 825 of computing system 805, which is described in further detail in the text associated with Figure 8. Memory 140 is generally representative of one or more storage media sufficient to store executable instructions associated with the elements and processes of circuit breaking system. An example of such storage media is given by storage system 810 of computing system 805 and is described in further detail in the text associated with Figure 8.

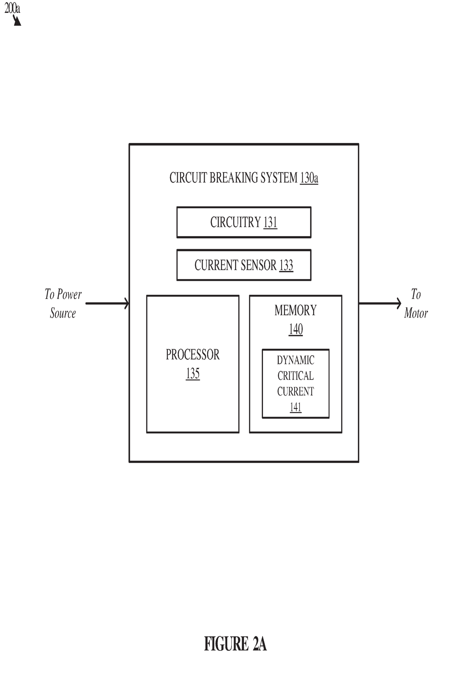

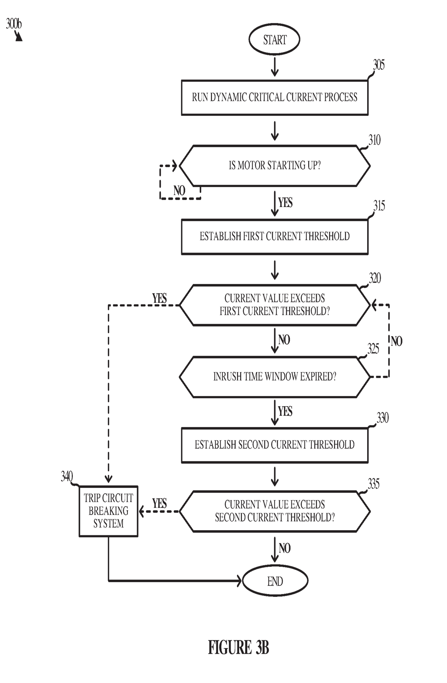

**Figure 2A** illustrates detail 200a depicting circuit breaking system 130a in accordance with some embodiments of the present technology. Circuit breaking system 130a of Figure 2A may be one embodiment of circuit breaking system 130 of Figure 1 and is described in detail in the text associated with Figure 1. As illustrated in circuit breaking system 130a in detail 200a, circuit breaking system 130a includes additional elements that are not illustrated in Figure 1 for clarity but that allow for circuit breaking system 130 to perform the algorithm depicted in FIG. 3B.

As shown in Figure 2A, circuit breaking system 130a includes circuitry 131, current sensor 133, processor 135, and memory 140. Memory 140 further includes dynamic critical current 141. Current sensor 133, processor 135, and memory 140 of circuit breaking system 130a are substantively the same as current sensor 133, processor 135, and memory 140 of Figure 1 and are described in detail in the text associated with Figure 1.

Circuitry 131 is generally representative of the conductive elements of circuit breaking system 130 that facilitate the ability of circuit breaking system 130 to relay electrical energy produced by a power supply (e.g., power supply 110 of Figure 1) from the power supply to a motor load (e.g., motor 120 of Figure 1) in order to drive the motor load. Circuitry 131 is further representative of conductive elements that facilitate communicative coupling between the various elements of circuit breaking system 130. Additionally, circuitry 131 facilitates diagnostic processes of the elements of circuit breaking system 130, such as the ability of current sensor 133 to detect instantaneous current values associated with the signal being used to drive motor 120. In some embodiments, circuitry 131 includes one or more switches that, when instructed by processor 135 in relation to a trip of circuit breaking system 130, interrupts the conductive coupling by which motor 120 was receiving electrical energy. In some cases, circuitry 131 includes a number of semiconductors. Where circuitry 131 interrupts the conductive coupling by which motor 120 was receiving electrical energy, no electrical energy continues to flow from power supply 110 to motor 120.

Dynamic critical current 141 of memory 140 is generally representative of software or firmware that, when executed by a processor such as processor 135, directs processor 135 to establish and monitor thresholds for instantaneous current values of the input signal provided by the power supply (e.g., power supply 110) and intended to drive the motor load (e.g., motor 120). When a threshold for instantaneous current value is exceeded, processor 135 directs circuitry 131 to interrupt the flow of electrical energy from the power supply to the motor load. Dynamic critical current 141 directs processor 135 to establish different current thresholds at different times in order to account for increased instantaneous current values resulting from inrush current. Accounting for such increased instantaneous current values improves the ability of circuit breaking system 130 to differentiate between inrush current and short circuit current. When an instantaneous current value detected by current sensor 133 exceeds a current threshold established by processor 135 as directed by dynamic critical current 141, processor 135 is then directed to interrupt the flow of electrical energy to the motor load (e.g., motor 120), thereby tripping circuit breaking system 130.

In some scenarios, dynamic critical current 141 is further configured to provide a pulse of electrical energy to the motor load via circuit breaking system 130. In response to the pulse, an inrush current draw of the motor load is measured. The initial, and higher, of the current limits can then be determined at least in part based on the inrush current draw. In some scenarios, the initial and higher of the current limits is set to a default expected inrush current. In some scenarios, the subsequent and lower current limit is set to a default runtime value.

In some scenarios, the initial and higher of the current limits (i.e., the current threshold associated with the expected inrush current) is set to an application specific value. The application specific value is a value that corresponds to a particular use-case (i.e., application). There may be any number of application specific values, each corresponding to a different use case. In such scenarios, each application specific value is based at least in part on one or more characteristics of the motor load, one or more characteristics of the application, or a combination thereof. For example, where the motor has a relatively low internal resistance, a higher inrush current can be expected, and therefore a higher application specific value is used for the expected inrush current value. In particular, when processor 135 executes dynamic critical current 141, a first current threshold is established. The first current threshold is established in response to a motor load, such as motor 120, turning on. In some cases, the first current threshold is established in response to the motor load receiving an input signal that delivers non-zero electrical energy. In any case, dynamic critical current 141 directs processor 135 to establish the first current threshold.

In particular, dynamic critical current 141 directs processor 135 to establish the first current threshold with a sufficient magnitude such that an inrush current associated with turning on the motor load (e.g., motor 120) does not trigger a trip of circuit breaking system 130. The first current threshold may be, for example, a current value that exceeds the expected inrush current value. For example, the first current threshold may be between two-hundred and fifty milliamperes (250mA) and two amperes (2A) greater than the expected inrush current value. The first current threshold is established and used for a predetermined period of time (i.e., an inrush time window). The inrush time window is selected such that the transient effects of the input signal associated with inrush current have reached a steady state or have otherwise been dampened. For example, the inrush time window may be between fifteen milliseconds (15 ms) and thirty-five milliseconds (35 ms). After the inrush time window, dynamic critical current 141 directs processor 135 to establish a second current threshold. The second current threshold is selected to be lower than the first current threshold because by the time the inrush time window expires, the transient signal characteristics associated with inrush current have become insignificant. For example, the second current threshold (i.e., runtime current threshold) may be between one ampere (1A) and ten amperes (10A) greater than the expected runtime current value (i.e., nominal current value during runtime). As a result, transient characteristics associated with inrush current are less likely to interpreted as transient characteristics typically associated with harmful short circuits. This allows circuit breaking system 130 to avoid tripping as a response to necessary and typical inrush current and to preserve the ability of circuit breaking system 130 to trip in response to short circuits.

Processor 135 is directed by dynamic critical current 141 to monitor instantaneous current values provided by current sensor 133 to determine where an instantaneous current value exceeds the first current threshold during the predetermined time period, or else where an instantaneous current value exceeds the second current threshold. Should processor 135 determine that either the first current threshold or second current threshold has been exceeded during the predetermined time period or after, respectively, processor 135 directs circuitry 131 to interrupt the flow of electrical energy to the motor load (e.g., motor 120).

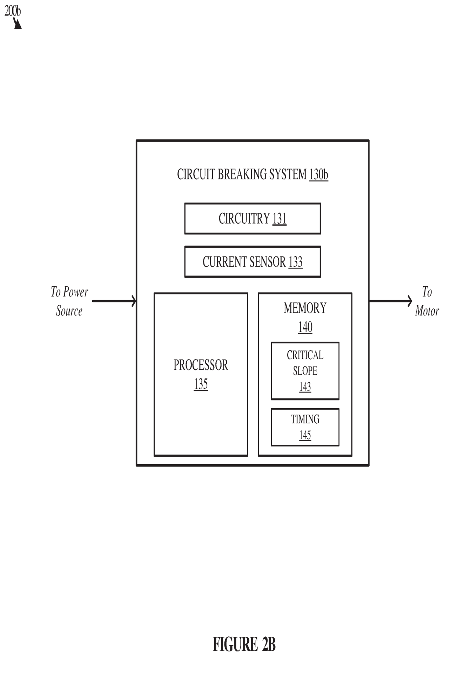

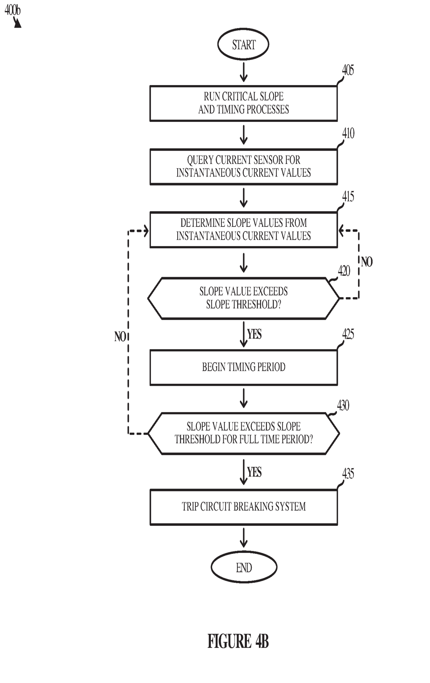

**Figure 2B** illustrates detail 200b depicting circuit breaking system 130b in accordance with some embodiments of the present technology. Circuit breaking system 130b of Figure 2B may be one embodiment of circuit breaking system 130 of Figure 1 and is described in detail in the text associated with Figure 1. As illustrated in circuit breaking system 130b, circuit breaking system 130 includes additional elements that are not illustrated in Figure 1 for clarity but that allow circuit breaking system 130 to perform the algorithm depicted in FIG. 4B.

As shown in Figure 2B, circuit breaking system 130b includes circuitry 131, current sensor 133, processor 135, and memory 140. As further illustrated in Figure 2B, memory 140 also includes critical slope 143 and timing 145. Current sensor 133, processor 135, and memory 140 of circuit breaking system 130b are substantively the same as current sensor 133, processor 135, and memory 140 of operational environment 100 of Figure 1 and are described in detail in the text associated with Figure 1. Further, circuitry 131 of Figure 2B is substantively the same as circuitry 131 of Figure 2A and is described in detail in the text associated with Figure 2A.

Critical slope 143 is generally representative of software, firmware, or hardware for receiving information regarding instantaneous current values of a signal from a current sensor (e.g., current sensor 133), determining slope information (i.e., rate of change information) for the instantaneous current values, and comparing the slope information to a predetermined critical slope threshold. The critical slope threshold, also called the critical slope, represents a predetermined value that, if exceeded, results in a tripping of circuit breaking system 130. An administrator or technician may configure the critical slope value in advance of circuit breaking system 130 being deployed into an operational environment, such as operational environment 100 of Figure 1. In some embodiments, the critical slope threshold may be between forty amperes per microsecond (40A/µs) and seventy amperes per microsecond (70A/µs).

In some scenarios, critical slope 143 directs processor 135 to query current sensor 133 at a predetermined fixed frequency. In some other scenarios, critical slope 143 may direct processor 135 to increase or decrease the frequency with which processor 135 queries current sensor 133. For example, critical slope 143 may direct processor 135 to query current sensor 133 at a first frequency, and in response to detecting a current slope value that exceeds the critical slope threshold, to query current sensor 133 at a second, higher, frequency. The time differential used to determine the current slope values may be made shorter or longer depending on the signal being evaluated.

As illustrated in Figure 2B, critical slope 143 is represented as executable instructions included in memory 140 that, when executed by processor 135, cause processor 135 to carry out critical slope evaluation processes. In particular, when processor 135 executes critical slope 143, processor 135 queries current sensor 133 for, and keeps a record of, instantaneous current values for the input signal produced by the power supply (e.g., power supply 110 of Figure 1). The record of instantaneous current values used to facilitate determining current slope values may be stored in memory 140.

Timing 145 is generally representative of software, hardware, or firmware for evaluating periods of time. Timing 145 is illustrated as executable instructions that, when executed by processor 135, direct processor 135 to begin timing a period. Processor 135 may be directed to begin timing a period in response to detecting a current slope value that has exceeded the critical slope threshold. In some cases, timing 145 may track multiple time periods simultaneously, each of which may have begun at varying times. Timing 145 is configured with one or more predetermined time period lengths that are used to identify situations where circuit breaking system 130 should be tripped. The timing periods may be, for example, between four microseconds (4ms) and six microseconds (6ms).

In an example operation, processor 135 executes critical slope 143 and timing 145. A power supply, such as power supply 110 of Figure 1, transmits electrical energy (i.e., an input signal) to circuit breaking system 130, which transmits the electrical energy via circuitry 131 to a motor load, such as motor 120 of Figure 1. Processor 135 queries current sensor 133, which provides processor 135 with a series of instantaneous current values associated with the input signal. Based on the instantaneous current values, processor 135 determines current slope values for the input signal. Processor 135 continues to determine current slope values for the input signal until such a time (if it happens) where a current slope value exceeds the critical slope threshold. In response to a current slope value exceeding the critical slope threshold, processor 135, having executed timing 145, begins timing a period of time. For example, if the current slope threshold is sixty amperes per microsecond (60A/µs) and the timing period is 4 milliseconds (4ms), when the current slope reaches 60 A/µs, the timer begins.

During the timing window, which begins immediately with the detection of a current slope value that exceeds the critical slope threshold, the current slope is continuously monitored until either the timing window expires, or the current slope value drops back below the critical slope threshold. Where processor 135 determines that the current slope values of the input signal have exceeded the critical slope threshold and that the current slope values have exceeded the critical slope threshold for the entire length of a predetermined period, processor 135 directs circuitry 131 to interrupt the flow of electrical energy (i.e., the input signal) such that the motor load no longer receives the electrical energy, thereby tripping circuit breaking system 130. If the current slope value falls below the critical slope threshold before the timing window expires, circuit breaking system 130 does not trip.

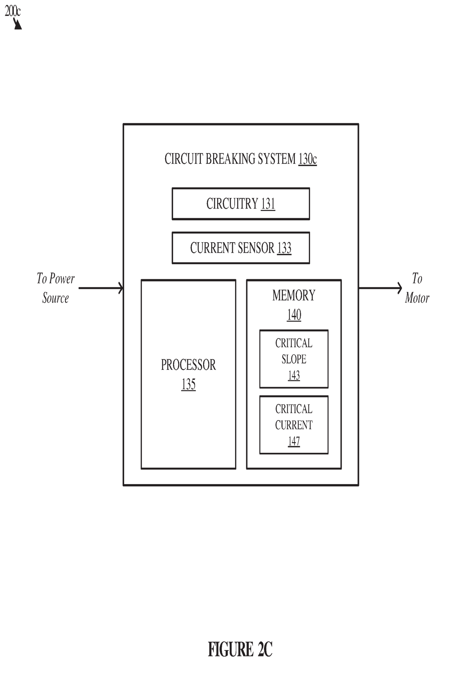

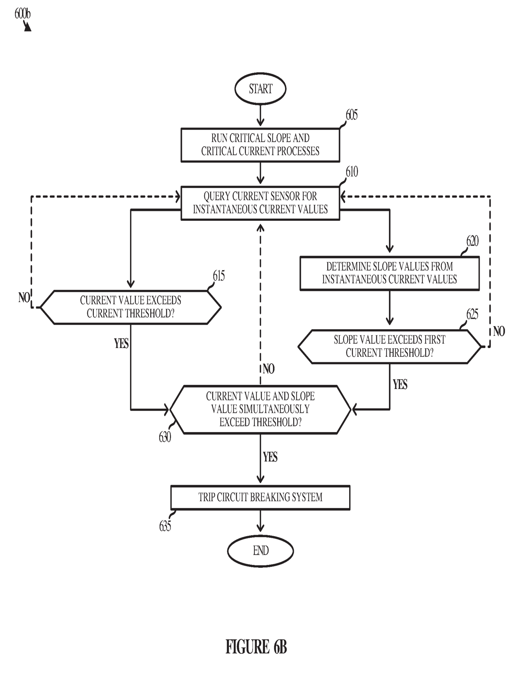

**Figure 2C** illustrates detail 200c including circuit breaking system 130c in detail in accordance with some embodiments of the present technology. Circuit breaking system 130c may be one embodiment of circuit breaking system 130 of Figure 1 and is described in detail in the text associated with Figure 1. As illustrated in circuit breaking system 130c, circuit breaking system 130 includes additional elements that are not illustrated in Figure 1 for clarity, but that allow circuit breaking system 130 to perform the algorithm depicted in FIG. 6B.

As shown in Figure 2C, circuit breaking system 130 includes circuitry 131, current sensor 133, processor 135, and memory 140. As further illustrated in Figure 2B, memory 140 also includes critical slope 143 and critical current 147. Current sensor 133, processor 135, and memory 140 of circuit breaking system 130c are substantively the same as current sensor 133, processor 135, and memory 140 of operational environment 100 of Figure 1 and are described in detail in the text associated with Figure 1. Further, circuitry 131 of Figure 2B and critical slope 143 are each substantively the same as circuitry 131 of Figure 2A and critical slope 143 of Figure 2B, respectively.

Critical current 147 is generally representative of software, firmware, or hardware for receiving information regarding instantaneous current values of a signal from a current sensor (e.g., current sensor 133) and comparing the instantaneous current values to a predetermined critical current threshold. The critical current threshold, also called the critical current, represents a predetermined value that, if exceeded, results in a tripping of circuit breaking system 130. An administrator or technician may configure the critical current value in advance of circuit breaking system 130 being deployed into an operational environment, such as operational environment 100 of Figure 1. The critical current threshold may be set to be, for example, between 5 times and 20 times a nominal current draw of the load during runtime. For example, critical current threshold may be 5 times the nominal current draw, 10 times the nominal current draw, 15 times the nominal current draw, 20 times the nominal current draw, or any other suitable value.

In some scenarios, critical current 147 directs processor 135 to query current sensor 133 at a predetermined fixed frequency. In some other scenarios, critical current 147 may direct processor 135 to increase or decrease the frequency with which processor 135 queries current sensor 133. For example, critical current 147 may direct processor 135 to query current sensor 133 at a first frequency, and in response to detecting a current value that exceeds the critical current threshold, to query current sensor 133 at a second, higher, frequency.

As illustrated in Figure 2C, critical current 147 is represented as executable instructions included in memory 140 that, when executed by processor 135, cause processor 135 to carry out critical current evaluation processes. In particular, when processor 135 executes critical current 147, processor 135 queries current sensor 133 for, and in some cases keeps a record of, instantaneous current values for the input signal produced by the power supply (e.g., power supply 110 of Figure 1). The record of instantaneous current values used to facilitate determining current slope values may be stored in memory 140.

In an example operation, processor 135 executes critical slope 143 and critical current 147. A power supply, such as power supply 110 of Figure 1, transmits electrical energy (i.e., an input signal) to circuit breaking system 130, which transmits the electrical energy via circuitry 131 to a motor load, such as motor 120 of Figure 1. Processor 135 queries current sensor 133, which provides processor 135 with a series of instantaneous current values associated with the input signal. Based on the instantaneous current values, processor 135 determines current slope values for the input signal. Processor 135 continues to determine current slope values for the input signal until such a time where a current slope value exceeds the critical slope threshold.

At the same time, processor 135 determines if the instantaneous current values exceed the critical current threshold. In the current embodiment, where processor 135 determines that both the critical current threshold and the critical slope threshold are simultaneously exceeded, processor 135 directs circuitry 131 to interrupt the flow of electrical energy to the motor load, thereby tripping circuit breaking system 130.

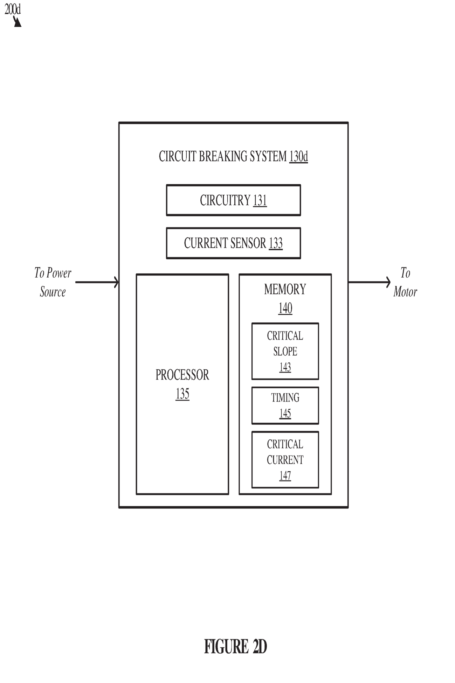

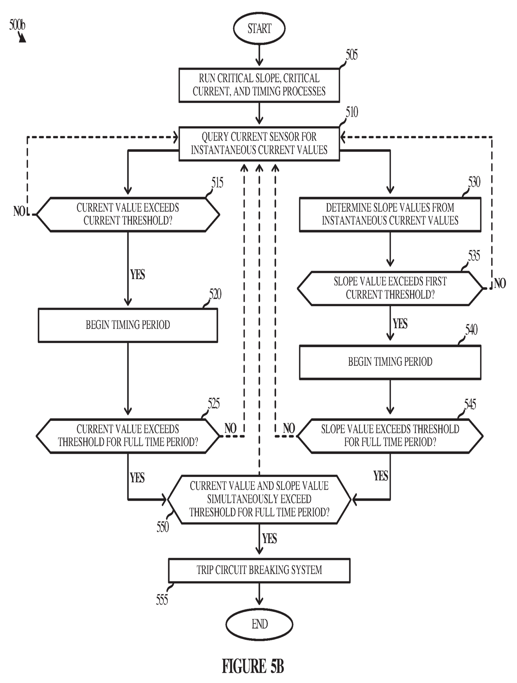

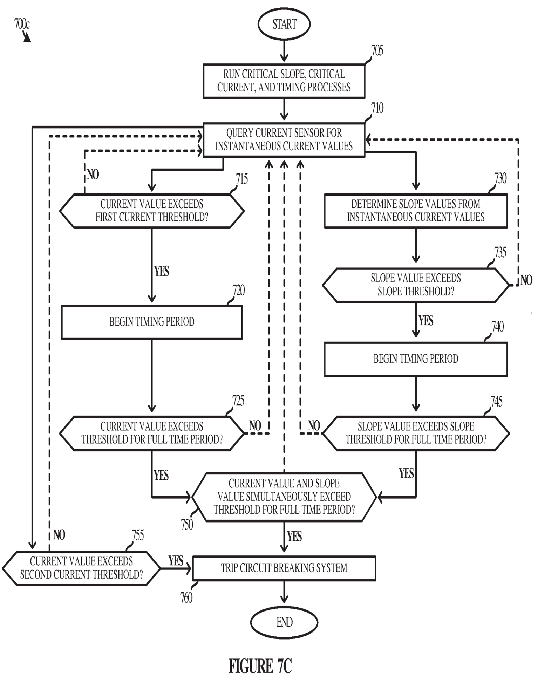

**Figure 2D** illustrates detail 200d including circuit breaking system 130d in accordance with some embodiments of the present technology. Circuit breaking system 130d may be one embodiment of circuit breaking system 130 of Figure 1 and is described in detail in the text associated with Figure 1. As illustrated in circuit breaking system 130d, circuit breaking system 130 includes additional elements that are not illustrated in Figure 1 for clarity, but that allow circuit breaking system 130 to perform the algorithms depicted in FIGs. 5B and 7C.

As shown in Figure 2D, circuit breaking system 130d includes circuitry 131, current sensor 133, processor 135, and memory 140. As further illustrated in Figure 2B, memory 140 also includes critical slope 143, timing 145, and critical current 147. Current sensor 133, processor 135, and memory 140 of circuit breaking system 130d are substantively the same as current sensor 133, processor 135, and memory 140 of operational environment 100 of Figure 1 and are described in detail in the text associated with Figure 1. Further, circuitry 131, critical slope 143, timing 145, and critical current 147 are each substantively the same as circuitry 131 of Figure 2A, critical slope 143 of Figure 2B, timing 145 of Figure 2B, and critical current 147 of Figure 2C, respectively.

The embodiment illustrated in Figure 2D includes parallel processes that can result in the tripping of circuit breaking system 130d. The first of the parallel processes relies on instantaneous current values, while the second of the parallel processes relies on a combination of instantaneous current values and slope values evaluated over predetermined time periods as facilitated by timing 145. The combination of parallel process strengthens the diagnostic ability of circuit breaking system 130d in that one of the parallel processes can include a current limit that is set relatively high, while the other parallel process can have a lower current limit in combination with additional detection strategies. Utilizing multiple detection strategies that leverage different levels of sensitivity to different current characteristics provides additional degrees of flexibility in the detection and differentiation of inrush current and short circuit current.

To achieve the parallel processes, critical current 147 includes at least two different critical current threshold values. The first critical current threshold corresponds to the process that relies on instantaneous current values, while the second critical current threshold is an element of the process that relies on a combination of instantaneous current values and slope values evaluated over predetermined time periods

In an example operation, processor 135 executes critical slope 143, timing 145, and critical current 147. A power supply, such as power supply 110 of Figure 1, transmits electrical energy (i.e., an input signal) to circuit breaking system 130, which transmits the electrical energy via circuitry 131 to a motor load, such as motor 120 of Figure 1. Processor 135 queries current sensor 133, which provides processor 135 with a series of instantaneous current values associated with the input signal. Processor 135 identifies instantaneous current values and determines current slope values for the input signal.

In one scenario, a short circuit scenario occurs, and the current value of the input signal provided by the power supply (e.g., power supply 110 of Figure 1) quickly becomes very large. In such a scenario, the first critical current threshold is exceeded. Because the first of the parallel processes does not include a timing component, exceeding the first critical current threshold is sufficient to cause the tripping of circuit breaking system 130. As a result, processor 135 directs circuitry 131 to interrupt the flow of electrical energy to the motor load, thereby tripping circuit breaking system 130.

In another scenario, a short circuit scenario occurs. In this scenario, however, the motor load (e.g., motor 120) has a high internal resistance to the flow of electrical energy, and as such, is subject to a lesser amperage than would otherwise be the case for a motor load having a lower internal resistance. As a result, the current value of the input signal provided by the power supply (e.g., power supply 110 of Figure 1) quickly increases, but may not rise to the same magnitude as the previous scenario described above. In such a scenario, the increased instantaneous current values identified by current sensor 133 exceed the second critical current threshold. In response, processor 135 begins timing a time period associated with the instantaneous current values.

At the same time, processor 135 tracks and records instantaneous current values provided by current sensor 133 in order to determine current slope values in accordance with the executable instructions of critical slope 143. The short circuit occurring in the instant scenario causes the current slope to increase beyond the critical slope threshold. In response, processor 135 begins timing a time period associated with current slope values.

Where processor 135 determines both that the instantaneous current values have exceeded the critical current threshold for the entirety of a predetermined time period and that the current slope values have exceeded the critical slope threshold for the entirety of a predetermined time period, processor 135 directs circuitry 131 to interrupt the flow of electrical energy to the motor load.

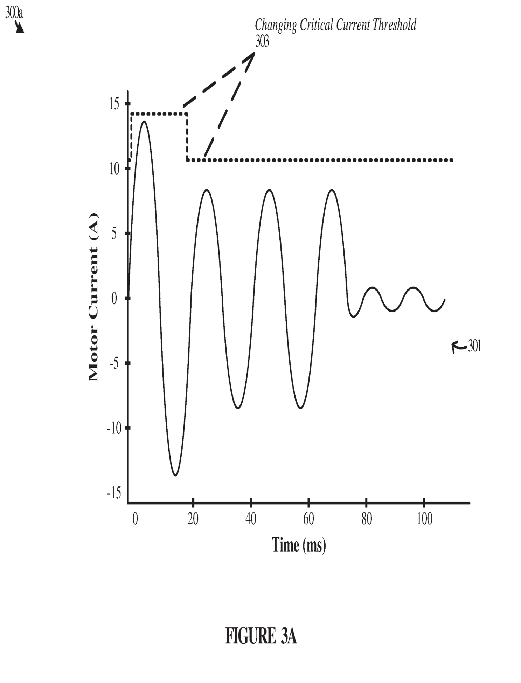

**Figure 3A** illustrates signal plot 300a in accordance with some embodiments of the present technology. Figure 3A and the elements illustrated therein may be considered with respect to elements and techniques described in Figure 1 and Figure 2A, respectively. In particular, signal plot 300a illustrates a waveform associated with an example application of circuit breaking system 130 of Figure 2A in an operational environment, such as operational environment 100 of Figure 1. Note that the graphical representations shown in Figure 3A are not necessarily drawn to scale.

Signal plot 300a includes a two-dimensional graph having an x-axis and a y-axis, which includes waveform 301 and threshold 302. Threshold 302 acts as a variable upper limit for y-axis values. The x-axis of signal plot 300a represents the time domain measured in milliseconds. Values for the x-axis begin at zero milliseconds and end at 100 milliseconds. The y-axis of signal plot 300a represents current values identified at different points in time measured in amps. Values for the y-axis begin at negative fifteen amps and end at positive fifteen amps.

Waveform 301, as illustrated in signal plot 300a, is generally representative of a signal associated with an input signal generated by a power supply (e.g., power supply 110) in order to drive a motor load (e.g., motor 120). A motor configured to receive and be driven by alternating current input signals, of which motor 120 is generally representative, undergoes a lack of counter-electromotive force (EMF) during start up. This lack of EMF can result in the occurrence and subsequent detection of relatively significant current characteristics in the input signal generated by the power supply. The higher current values associated with the startup of a motor load are often referred to as inrush current. Inrush current is a necessary portion of the function of many kinds of motor loads (e.g., motor 120), and is generally not harmful to such devices. On the other hand, the significant current characteristics associated with a short circuit can be highly destructive to motor loads such as motor 120. Problematically, the current characteristics associated with inrush current can be difficult to distinguish from the current characteristics associated with a short circuit. As illustrated in Figure 3A, waveform 301 exhibits the most significant current values during the first period of the sinusoidal signal, decreases to a lower peak value for several periods of the sinusoidal signal, and finally decreases to nominal peak values typically expected during operation.

To account for the increased amperage associated with inrush current while retaining the ability to trip under short circuit conditions, circuit breaking system 130 leverages a dynamic critical slope procedure is used. An example of such a dynamic critical slope procedure is given by dynamic critical current 141 of Figure 2A. In response to a start-up of a motor load associated with circuit breaking system 130, the dynamic critical slope procedure establishes a first critical current threshold. The start-up of the motor load may be an initial powering on of the motor or else a restarting of the motor after some period of not being powered on. Where circuit breaking system 130 determines that a current value exceeds the first current threshold, circuit breaking system 130 disrupts the flow of electrical energy being used to drive the motor load.

The first current threshold is selected to be an increased value that accounts for inrush current and allows circuit breaking system 130 to accommodate such inrush current without tripping while maintaining the ability to trip in response to amperage associated with a short circuit. As shown in Figure 3A, the increased current threshold is sufficient to allow for the increased peak current values of approximately fourteen amps associated with inrush current. As further shown in Figure 3A, the first period of the sinusoidal waveform occurs in approximately twenty milliseconds, though may be shorter or longer in other scenarios.

After a predetermined time period configured to allow for some number of initial sinusoidal periods of the waveform, a second current threshold is established. The second current threshold is selected to be lower than the first current threshold. As shown in Figure 3A, the second current threshold is sufficient to allow for the lower current peak values of approximately thirteen amps occurring from approximately twenty milliseconds to approximately seventy milliseconds.

**Figure 3B** illustrates method 300b in accordance with some embodiments of the present technology. The method steps of Figure 3B may be considered with respect to the elements and techniques of Figure 3A. In particular, method 300b illustrates the method steps associated with an example application of circuit breaking system 130 of Figure 2A in an operational environment such as operational environment 100 of Figure 1. For clarity, some of the arrows that indicate a possible outcome from a conditional step of method 300b are shown as dotted lines.

To begin, a circuit breaking system (e.g., circuit breaking system 130 of Figure 1) executes a dynamic critical current process, an example of which is given by dynamic critical current 141 of Figure 2A (step 305). With the executable instructions associated with the dynamic critical current process executed by the circuit breaking system, the circuit breaking system determines when the motor load (e.g., motor 120) is starting up (step 310). In some embodiments, where the motor load is not yet starting up, the circuit breaking system continues to evaluate the motor load in anticipation of the motor load starting up. Where the circuit breaking system determines that the motor load is starting up, the circuit breaking system establishes a first current threshold (step 315). For example, the circuit breaking system may set the first current threshold to be between 250 mA and 2A greater than the expected inrush current.

The circuit breaking system determines if instantaneous current values associated with the input signal exceed the first current threshold (step 320). Where the circuit breaking system determines that instantaneous current values associated with the input signal have exceeded the first current threshold, the circuit breaking system interrupts the flow of electrical energy to the motor load, thereby tripping the circuit breaking system (step 340). Where the circuit breaking system determines that instantaneous current values associated with the input signal have not exceeded the first current threshold, the circuit breaking system determines if the inrush time period has expired (step 325). The inrush time period may be between, for example, 15 ms and 35 ms, and the time period may begin immediately when the motor startup begins. For example, circuit breaking system may include the start switch for the motor that connects the circuit to allow current flow to the motor, and the switch may also initiate an inrush time period timer. Where the inrush time period has not expired, the circuit breaking system continues to evaluate the input signal for current values that exceed the first current threshold.

Upon expiration of the inrush time period, circuit breaking system 130 establishes a second current threshold that is lower than the first current threshold (step 330). For example, the second current threshold may be between 1A and 10A greater than the expected nominal current during runtime (i.e., expected runtime current value). Circuit breaking system 130 then evaluates the current characteristics of the input signal to determine if the current values have exceeded the second current threshold (step 335). Where the circuit breaking system determines that instantaneous current values associated with the input signal have exceeded the second current threshold, the circuit breaking system interrupts the flow of electrical energy to the motor load, thereby tripping the circuit breaking system (step 340).

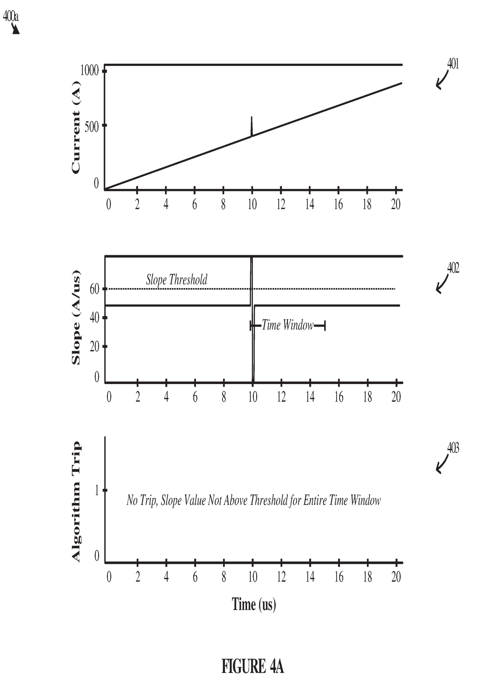

**Figure 4A** illustrates signal plots 400a in accordance with some embodiments of the present technology. Figure 4A and the elements illustrated therein may be considered with respect to elements and techniques described in Figure 1 and Figure 2B, respectively. In particular, signal plots 400a illustrates an example application of circuit breaking system 130 of Figure 2B in an operational environment such as operational environment 100 of Figure 1.

Signal plot 400a includes three different two-dimensional graphs having an x-axis and a y-axis, represented by graph 401, graph 402, and graph 403. Graph 401 includes an x-axis representative of the time domain and a y-axis representative of instantaneous current values for the input signal to a motor load, such as motor 120 of Figure 1. The current values for the y-axis of graph 401 ranges from zero amps to one thousand amps. Graph 402 includes an x-axis representative of the time domain and a y-axis representative of a rate of change for the current represented in graph 401 (i.e., the slope of the waveform shown in graph 401). The slope values of the y-axis of graph 402 are given in amps per microsecond and range from zero amps per second to sixty amps per second. Graph 403 includes an x-axis representative of the time domain and a y-axis that illustrates whether or not circuit breaking system 130 has undergone a trip (i.e., circuit breaking system 130 disrupts the flow of electrical energy to the motor load). The x-axis of each of graph 401, graph 402, and graph 403 is represented in microseconds and ranges from zero microseconds to 20 microseconds. Note that the graphical representations shown in Figure 4A are not necessarily drawn to scale.

Graph 401 illustrates a waveform representative of linearly increasing current values associated with an input signal for driving a motor load. The linearity of the increasing current values shown in graph 401 is briefly interrupted by a spike in the waveform that sharply rises and falls over a short time period. The spike in current values may be the result of electrical noise produced by another portion of circuit breaking system 130 or may be the result of some other event or condition. Notably, the sharp increase in current values and the subsequent sharp decrease in current values that disrupt the linearity of the waveform in graph 401 occurs over a period lasting approximately one quarter of one microsecond.

Graph 402 illustrates rate of change values (i.e., slope values) for the waveform shown in graph 401. The linearity of the waveform in graph 401 between zero and just before ten microseconds corresponds to a constant slope value shown in graph 402 for the same time period. Similarly, the linearity of the signal in graph 401 between just after ten microseconds to twenty microseconds corresponds to a constant slope value shown in graph 402 for that time period. Graph 402 includes a y-axis value limit represented as a dotted line. The y-axis value limit represents the threshold slope values, that when exceeded, indicate that the current characteristics of the input signal have increased to levels associated with increased risk that may damage the motor load or other ancillary devices. As shown in graph 402, the y-axis value limit is approximately sixty amps per microsecond. In some cases, there may be a negative counterpart to the y-axis value limit, though such a counterpart is not illustrated in Figure 4A for simplicity.

The sharp upwards spike and sharp downwards spike in current values shown on graph 401 occurring at or about ten microseconds correspond to high positive and negative peak values for the slope shown in graph 402. In particular, the sharp increase corresponds to a significant increase in slope values that exceeds the threshold slope value. However, as further shown in graph 402 and as a result of the executable instructions associated with timing 145 of circuit breaking system 130 of Figure 2B, tripping of circuit breaking system 130 requires that the slope values exceed the slope threshold for a full predetermined time period. Beneficially, this allows circuit breaking system to ignore (i.e., avoid tripping for) the slope value increases associated with noise spikes of very short duration while maintaining the ability to detect the increased current associated with short circuits.

Graph 403 illustrates the state of circuit breaking system 130, wherein a value of zero indicates circuit breaking system 130 has not tripped while a value of one indicates circuit breaking system 130 has tripped. Graph 403 shows that at no point between zero and twenty microseconds did circuit breaking system 130 trip. As shown in graph 402, despite the slope values exceeding the threshold slope value for a brief period of time, that period was only a small portion of the entire time window illustrated below the waveform. Because in the current embodiment, circuit breaking system 130 trips in response to the slope values exceeding the threshold slope value for the full time window, no trip is caused and the waveform of graph 403 remains at zero.

**Figure 4B** illustrates further method 400b in accordance with some embodiments of the present technology. The method steps of Figure 4B may be considered with respect to the elements and techniques of Figure 4A. In particular, method 400b illustrates the method steps associated with an example application of circuit breaking system 130 of Figure 2B in an operational environment such as operational environment 100 of Figure 1. For clarity, some of the arrows that indicate a possible outcome from a conditional step of further method 400b are shown as dotted lines.

To begin, a circuit breaking system (e.g., circuit breaking system 130 of Figure 1) executes a critical slope process and a timing process, examples of which are given by critical slope 143 and timing 145, each of Figure 2B, respectively (step 405). The circuit breaking system queries a current sensor (e.g., current sensor 133 of Figure 2B) to obtain instantaneous current values associated with an input signal provided by a power supply (e.g., power supply 110 of Figure 1) in order to drive a motor load (e.g., motor 120) (step 410). Based on the instantaneous current values obtained from the current sensor, the circuit breaking system determines slope values for the input signal (step 415).

The circuit breaking system utilizes two different instantaneous current value readings from different points in time to determine the rate of change for the instantaneous current. The circuit breaking system evaluates the slope values to identify where a slope value exceeds the threshold slope value (step 420). The threshold slope value represents an upper limit for the slope, which when exceeded, indicates that current characteristics associated with an increased risk to devices and persons are present. The threshold slope value may be, for example, between 40A/µs and 70A/µs. Where the slope value does not exceed the threshold slope value, the circuit breaking system continues to evaluate the slope values until such a time where the threshold slope value is exceeded.

Where the circuit breaking system determines that a slope value has exceeded the threshold slope value, the circuit breaking system begins timing a time period in accordance with a timing process (e.g., timing 145) (step 425). For example, the time period may be between 4ms and 6 ms. The circuit breaking system continues to evaluate the slope values during the time period to identify where the slope values have exceeded the threshold slope value for the entire time period (step 430). If the slope values have not exceeded the threshold slope value for the entire time period, the circuit breaking system continues to evaluate the slope values until such a time where the threshold slope value is exceeded and begins the timing the time period again. Where the circuit breaking system determines that the slope value exceeded the threshold slope value for the full time period, the circuit breaking system interrupts the flow of electrical energy to the motor load (e.g., motor 120), thereby tripping the circuit breaking system (step 435).

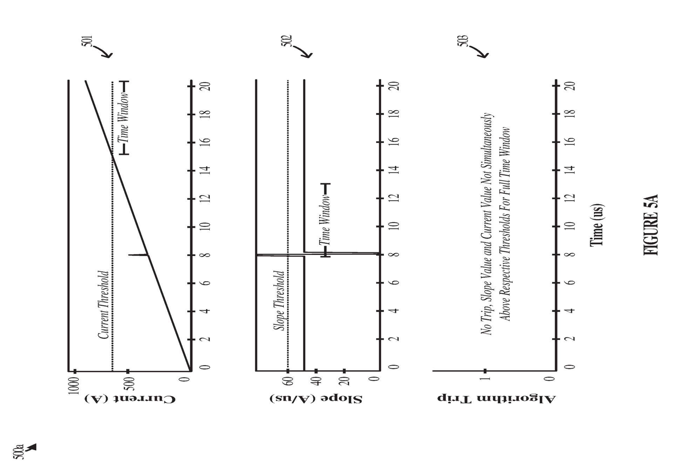

**Figure 5A** illustrates further signal plots 500a in accordance with some embodiments of the present technology. Figure 5A and the elements illustrated therein may be considered with respect to elements and techniques described in Figure 1 and Figure 2D, respectively. In particular, further signal plots 500a illustrates an example application of circuit breaking system 130 of Figure 2D in an operational environment, such as operational environment 100 of Figure 1.

Further signal plots 500a includes three different two-dimensional graphs having an x-axis and a y-axis, represented by graph 501, graph 502, and graph 503. Graph 501 includes an x-axis representative of the time domain and a y-axis representative of instantaneous current values for the input signal to a motor load, such as motor 120 of Figure 1. The current values for the y-axis of graph 501 ranges from zero amps to one thousand amps. Graph 502 includes an x-axis representative of the time domain and a y-axis representative of a rate of change for the current represented in graph 501 (i.e., the slope of the waveform shown in graph 501). The slope values of the y-axis of graph 502 are given in amps per microsecond and range from zero amps per second to sixty amps per second. Graph 503 includes an x-axis representative of the time domain and a y-axis that illustrates whether or not circuit breaking system 130 has undergone a trip (i.e., whether or not circuit breaking system 130 disrupts the flow of electrical energy to the motor load). The x-axis of each of graph 501, graph 502, and graph 503 is represented in microseconds and ranges from zero microseconds to 20 microseconds. Note that the graphical representations shown in Figure 5A are not necessarily drawn to scale.

Graph 501 illustrates a waveform representative of linearly increasing current values associated with an input signal for driving a motor load. The linearity of the increasing current values shown in graph 501 is briefly interrupted by a spike in the waveform that sharply rises and falls over a short time period. The spike in current values may be the result of electrical noise produced by another portion of circuit breaking system 130 or may be the result of some other event or condition. Notably, the sharp increase in current values and the subsequent sharp decrease in current values that disrupt the linearity of the waveform in graph 501 occurs over a period lasting approximately one quarter of one microsecond. Graph 501 includes y-axis value limit represented as a dotted line. The y-axis value limit represents a threshold current value, that when exceeded, indicate that the current characteristics of the input signal have increased to levels associated with increased risk that may damage the motor load or other ancillary devices. As shown in graph 501, the y-axis value limit is approximately six-hundred amps per microsecond. In some cases, there may be a negative counterpart to the y-axis value limit, though such counterparts are not illustrated in Figure 5A for simplicity.

Graph 502 illustrates rate of change values (i.e., slope values) for the waveform shown in graph 501. The linearity of the waveform in graph 501 between zero and just before eight microseconds corresponds to a constant slope value shown in graph 502 for the same time period. Similarly, the linearity of the signal in graph 501 between just after eight microseconds to twenty microseconds corresponds to a constant slope value shown in graph 502 for that time period. Graph 502 includes a y-axis value limit represented as a dotted line. The y-axis value limit represents a threshold slope value, that when exceeded, indicates that the current characteristics of the input signal have increased to levels associated with increased risk that may damage the motor load or other ancillary devices. As shown in graph 502, the y-axis value limit is approximately sixty amps per microsecond. In some cases, there may be a negative counterpart to the y-axis value limit, though such a counterpart is not illustrated in Figure 5A for simplicity.

The sharp upwards spike and sharp downwards spike in current values shown on graph 501 occurring at or about eight microseconds correspond to high positive and negative peak values for the slope shown in graph 502. In particular, the sharp increase corresponds to a significant increase in slope values that exceeds the threshold slope value. However, as further shown in graph 502 and as a result of the executable instructions associated with timing 145 of circuit breaking system 130 of Figure 2B, tripping of circuit breaking system 130 requires that both the current values and the slope values exceed the respective thresholds for the full span of the predetermined time period.

Graph 503 illustrates the state of circuit breaking system 130, wherein a value of zero indicates circuit breaking system 130 has not tripped while a value of one indicates circuit breaking system 130 has tripped. Graph 503 shows that at no point between zero and twenty microseconds did circuit breaking system 130 trip. As shown in graph 502, despite the slope values exceeding the threshold slope value for a brief period of time, that period was only a small portion of the entire time window illustrated below the waveform. Because in the current embodiment, circuit breaking system 130 trips in response to both the current values and the slope values exceeding the respective thresholds for the full time window, no trip is caused and the waveform of graph 503 remains at zero. Note that, as illustrated in graph 501, the current values do exceed the current threshold for the entire span of the time period. Despite this, however, circuit breaking system 130 is not tripped in the current embodiment because the slope values do not exceed the slope threshold for the entire time period. Even had the slope values exceeded the slope threshold for the entire time period, circuit breaking system 130 still would not have tripped because the current values and slope values would not have exceeded the respective thresholds for the entire time period simultaneously, but rather one after the other. In some other embodiments, the current values and slope values exceeding the respective thresholds one after the other may result in a trip of circuit breaking system 130, though in the current embodiment, no trip is triggered.

**Figure 5B** illustrates further method 500b in accordance with some embodiments of the present technology. The method steps of Figure 5B may be considered with respect to the elements and techniques of Figure 5A. In particular, further method 500b illustrates the method steps associated with an example application of circuit breaking system 130d of Figure 2D in an operational environment such as operational environment 100 of Figure 1. For clarity, some of the arrows that indicate a possible outcome from a conditional step of further method 500b are shown as dotted lines.

To begin, a circuit breaking system (e.g., circuit breaking system 130 of Figure 1) executes a critical slope process, a critical current process, and a timing process, examples of which are given by critical slope 143, critical current 147, and timing 145, each of Figure 2D, respectively (step 505). In some embodiments, each of the critical slope process, critical current process, and timing process may be executable instructions that, when executed by a processor, such as processor 135 of Figure 1, direct the processor to act in accordance with each of the respective processes. The circuit breaking system queries a current sensor (e.g., current sensor 133 of Figure 2B) to obtain instantaneous current values associated with an input signal provided by a power supply (e.g., power supply 110 of Figure 1) in order to drive a motor load (e.g., motor 120 of Figure 1) (step 510).

At this point in further method 500b, two separate branches are illustrated. Each of the branches represents separate conditions that must be met in order to trip the circuit breaking system in certain embodiments. In particular, the embodiments shown in Figure 5B require that both current values of the input signal and slope values of the input signal exceed respective thresholds, each for a certain amount of time. For example, the threshold current value may be five times the nominal current draw during runtime and the threshold slope may be between 40A/µs and 70A/µs. Where the current values of the input signal and slope values of the input signal both exceed respective thresholds simultaneously, the circuit breaking system is tripped.

Beginning with the leftmost branch of method steps, the circuit breaking system evaluates whether the current values returned from the current sensor in step 510 exceed a threshold current (step 515). Where the circuit breaking system determines that the current values returned from the current sensor in step 510 have not exceeded the threshold current, the circuit breaking system continues to query the current sensor for instantaneous current values. Where, however, the circuit breaking system determines that current values have exceeded the threshold current, the circuit breaking system begins timing a time period associated with the current values above the threshold (step 520). For example, the time period may be between 4ms and 6ms. The circuit breaking system continues to evaluate the current values while timing the time period. Where the circuit breaking system determines that the current values have not only exceeded the threshold value but exceeded the threshold value for the entire time period, the first branch of further method 500b is successfully complete (step 525). Should the current values not exceed the threshold value for the entire time period, the circuit breaking system returns to querying the current sensor for current values to process.

Now turning to the rightmost branch of further method 500b, the circuit breaking system determines slope values for the input signal based on the instantaneous current values obtained from the current sensor (step 530). The circuit breaking system evaluates whether the slope values exceed a threshold slope (step 535). Where the circuit breaking system determines that the slope values have not exceeded the threshold slope, the circuit breaking system continues to query the current sensor for instantaneous current values from which to determine slope values. Where, however, the circuit breaking system determines that slope values have exceeded the threshold slope, the circuit breaking system begins timing a time period associated with the slope values above the threshold (step 540). The circuit breaking system continues to evaluate the slope values while timing the time period. Where the circuit breaking system determines that the slope values have not only exceeded the threshold slope but exceeded the threshold slope for the entire time period, the second branch of further method 500b is successfully complete (step 545). Should the slope values not exceed the threshold slope for the entire time period, the circuit breaking system returns to querying the current sensor for current values to process.

Where both the left and right branches of further method 500b have successfully been completed (i.e., the outcomes of both step 525 and step 545 are *YES),* the circuit breaking system then determines whether the slope values and current values have exceeded the respective thresholds simultaneously (step 550). Note that as used here, simultaneously does not imply that the respective time periods must start and end at the exact same time. Rather, simultaneously as used herein and throughout the instant specification is intended to describe scenarios where, for example, current values have exceeded a threshold current for the proscribed time period, and while the current values remain above the threshold current, the slope values exceed the threshold slope for the proscribed time period. Note that there may be some delay between the completion of the time period corresponding to the current values (or whichever characteristic is evaluated first) and the completion of the time period corresponding to the slope values.

Figure 5A provides another example of the simultaneousness described herein and required in some embodiments for the tripping of the circuit breaking system. In Figure 5A, the slope values of graph 502 exceed the slope threshold before the current values of graph 501 exceed the current threshold. As such, simultaneousness here requires that the slope values remain above the slope threshold until such a time where the current values have exceeded the threshold current for the entire time period.

Returning to step 550 of further method 500b, where the circuit breaking system determines that the current values and slope values were not simultaneously above the respective thresholds, the circuit breaking system returns to querying the current sensor for current values to process. Where the circuit breaking system determines that the current values and slope values were simultaneously above the respective thresholds, the circuit breaking system interrupts the flow of electrical energy to the motor load, thereby tripping the circuit breaking system (step 555).

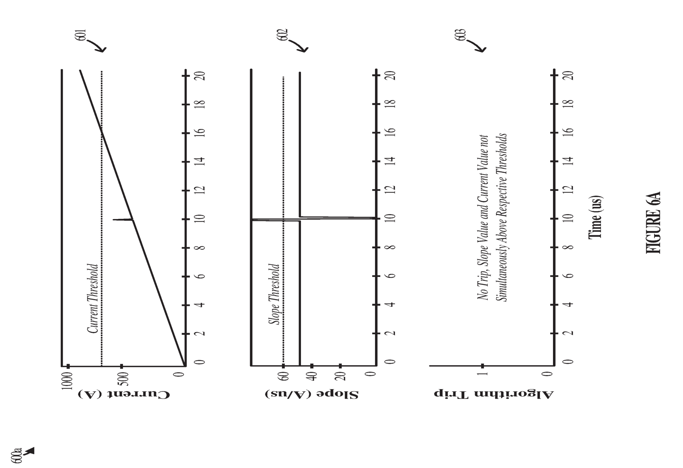

**Figure 6A** illustrates further signal plots 600a in accordance with some embodiments of the present technology. Figure 6A and the elements illustrated therein may be considered with respect to elements and techniques described in Figure 1 and Figure 2C, respectively. In particular, further signal plots 600a illustrate an example application of circuit breaking system 130 of Figure 2C in an operational environment, such as operational environment 100 of Figure 1.

Further signal plots 600a include three different two-dimensional graphs having an x-axis and a y-axis, represented by graph 601, graph 602, and graph 603. Graph 601 includes an x-axis representative of the time domain and a y-axis representative of instantaneous current values for the input signal to a motor load, such as motor 120 of Figure 1. The current values for the y-axis of graph 601 ranges from zero amps to one thousand amps. Graph 602 includes an x-axis representative of the time domain and a y-axis representative of a rate of change for the current represented in graph 601 (i.e., the slope of the waveform shown in graph 601). The slope values of the y-axis of graph 602 are given in amps per microsecond and range from zero amps per second to sixty amps per second. Graph 603 includes an x-axis representative of the time domain and a y-axis that illustrates whether or not circuit breaking system 130 has undergone a trip (i.e., whether or not circuit breaking system 130 disrupts the flow of electrical energy to the motor load). The x-axis of each of graph 601, graph 602, and graph 603 is represented in microseconds and ranges from zero microseconds to 20 microseconds. Note that the graphical representations shown in Figure 6A are not necessarily drawn to scale.

Graph 601 illustrates a waveform representative of linearly increasing current values associated with an input signal for driving a motor load (e.g., motor 120 of Figure 1). The linearity of the increasing current values shown in graph 601 is briefly interrupted by a spike in the waveform that sharply rises and falls over a short time period. The spike in current values may be the result of electrical noise produced by another portion of circuit breaking system 130 or may be the result of some other event or condition. Notably, the sharp increase in current values and the subsequent sharp decrease in current values that disrupt the linearity of the waveform in graph 601 occurs over a period lasting approximately one quarter of one microsecond. Graph 601 includes y-axis value limit represented as a dotted line. The y-axis value limit represents a threshold current value, that when exceeded, indicate that the current characteristics of the input signal have increased to levels associated with increased risk that may damage the motor load or other ancillary devices. As shown in graph 601, the y-axis value limit is approximately seven-hundred amps per microsecond. In some cases, there may be a negative counterpart to the y-axis value limit, though such counterparts are not illustrated in Figure 6A for simplicity.

Graph 602 illustrates rate of change values (i.e., slope values) for the waveform shown in graph 601. The linearity of the waveform in graph 601 between zero and just before ten microseconds corresponds to a constant slope value shown in graph 602 for the same time period. Similarly, the linearity of the signal in graph 601 between just after ten microseconds to twenty microseconds corresponds to a constant slope value shown in graph 602 for that time period. Graph 602 includes y-axis value limit represented as a dotted line. The y-axis value limit represents a threshold slope value, that when exceeded, indicates that the current characteristics of the input signal have increased to levels associated with increased risk that may damage the motor load or other ancillary devices. As shown in graph 602, the y-axis value limit is approximately sixty amps per microsecond. In some cases, there may be a negative counterpart to the y-axis value limit, though such a counterpart is not illustrated in Figure 6A for simplicity.

The sharp upwards spike and sharp downwards spike in current values shown on graph 601 occurring at or about ten microseconds correspond to high positive and negative peak values for the slope shown in graph 602. In particular, the sharp increase corresponds to a significant increase in slope values at approximately ten microseconds that exceed the threshold slope value. Additionally, the constantly increasing waveform shown in graph 601 exceeds the threshold current illustrated by the dotted line in graph 601 at approximately sixteen microseconds.

Graph 603 illustrates the state of circuit breaking system 130, wherein a value of zero indicates circuit breaking system 130 has not tripped while a value of one indicates circuit breaking system 130 has tripped. Graph 603 shows that at no point between zero and twenty microseconds did circuit breaking system 130 trip. As described above, the current values exceed the threshold current at approximately sixteen microseconds as shown in graph 601, while the slope values briefly exceed the threshold slope for beginning just before ten microseconds in graph 602 and ending just after ten microseconds. However, there is no instant in time illustrated in graph 601 and graph 602 during which the current value and slope value both exceed the respective thresholds at the same time. Instead, the slope threshold is exceeded from just before to just after ten microseconds while the current threshold is exceeded from sixteen microseconds to twenty microseconds. As such, and as illustrated in graph 603, no trip of circuit breaking system 130 is triggered.

**Figure 6B** illustrates further method 600b in accordance with some embodiments of the present technology. The method steps of Figure 6B may be considered with respect to the elements and techniques of Figure 6A. In particular, further method 600b illustrates the method steps associated with an example application of circuit breaking system 130 of Figure 2C in an operational environment such as operational environment 100 of Figure 1. For clarity, some of the arrows that indicate a possible outcome from a conditional step of further method 600b are shown as dotted lines.

To begin, a circuit breaking system (e.g., circuit breaking system 130 of Figure 1) executes a critical slope process and a critical current process, examples of which are given by critical slope 143 and critical current 147, each of Figure 2C, respectively (step 605). In some embodiments, each of the critical slope process and critical current process may be executable instructions that, when executed by a processor, such as processor 135 of Figure 1, direct the processor to act in accordance with each of the respective processes. The circuit breaking system queries a current sensor (e.g., current sensor 133 of Figure 2C) to obtain instantaneous current values associated with an input signal provided by a power supply (e.g., power supply 110 of Figure 1) in order to drive a motor load (e.g., motor 120 of Figure 1) (step 610).

At this point in further method 600b, two separate branches are illustrated. Each of the branches represents separate conditions that must be met in order to trip the circuit breaking system in certain embodiments. In particular, the embodiments shown in Figure 6B require that both current values of the input signal and slope values of the input signal exceed respective thresholds. Where the current values of the input signal and slope values of the input signal both exceed respective thresholds simultaneously, the circuit breaking system is tripped.

Beginning with the leftmost branch of method steps, the circuit breaking system evaluates whether the current values returned from the current sensor in step 510 exceed a threshold current (step 615). Where the circuit breaking system determines that the current values returned from the current sensor in step 610 have not exceeded the threshold current, the circuit breaking system continues to query the current sensor for instantaneous current values. The threshold current may be, for example, 5 times the nominal current during runtime (i.e., steady state). Where, however, the circuit breaking system determines that current values have exceeded the threshold current, the first branch of further method 600b is successfully complete.

Now turning to the rightmost branch of further method 600b, the circuit breaking system determines slope values for the input signal based on the instantaneous current values obtained from the current sensor (step 620). The circuit breaking system evaluates whether the slope values exceed a threshold slope (step 625). The threshold slope may be, for example, between 40A/µs and 70A/µs. Where the circuit breaking system determines that the slope values have not exceeded the threshold slope, the circuit breaking system continues to query the current sensor for instantaneous current values from which to determine slope values. Where, however, the circuit breaking system determines that slope values have exceeded the threshold slope, the second branch of further method 600b is successfully complete.

Where both the left and right branches of further method 600b have successfully been completed (i.e., the outcomes of both step 615 and step 625 are *YES*), the circuit breaking system then determines whether the slope values and current values have exceeded the respective thresholds simultaneously (step 630). Where the circuit breaking system determines that the current values and slope values were not simultaneously above the respective thresholds, the circuit breaking system returns to querying the current sensor for current values to process. Where the circuit breaking system determines that the current values and slope values were simultaneously above the respective thresholds, the circuit breaking system interrupts the flow of electrical energy to the motor load, thereby tripping the circuit breaking system (step 635).

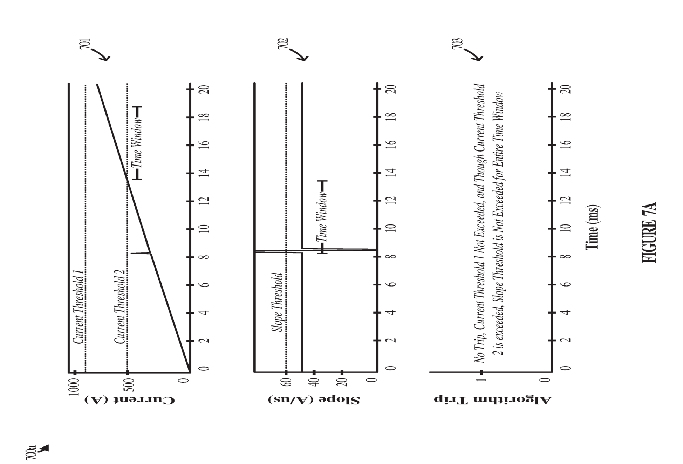

**Figure 7A** illustrates further signal plots 700a in accordance with some embodiments of the present technology. Figure 7A and the elements illustrated therein may be considered with respect to elements and techniques described in Figure 1 and Figure 2D, respectively. In particular, further signal plots 700a illustrates an example application of circuit breaking system 130 of Figure 2D in an operational environment, such as operational environment 100 of Figure 1.

Further signal plots 700a includes three different two-dimensional graphs having an x-axis and a y-axis, represented by graph 701, graph 702, and graph 703. Graph 701 includes an x-axis representative of the time domain and a y-axis representative of instantaneous current values for the input signal to a motor load, such as motor 120 of Figure 1. The current values for the y-axis of graph 701 ranges from zero amps to one thousand amps. Graph 702 includes an x-axis representative of the time domain and a y-axis representative of a rate of change for the current represented in graph 701 (i.e., the slope of the waveform shown in graph 701). The slope values of the y-axis of graph 702 are given in amps per millisecond and range from zero amps per millisecond to sixty amps per millisecond. Graph 703 includes an x-axis representative of the time domain and a y-axis that illustrates whether or not circuit breaking system 130 has undergone a trip (i.e., whether or not circuit breaking system 130 disrupts the flow of electrical energy to the motor load). The x-axis of each of graph 701, graph 702, and graph 703 is represented in milliseconds and ranges from zero milliseconds to 20 milliseconds. Note that the graphical representations shown in Figure 7A are not necessarily drawn to scale.

Graph 701 illustrates a waveform representative of linearly increasing current values associated with an input signal for driving a motor load (e.g., motor 120 of Figure 1). The linearity of the increasing current values shown in graph 701 is briefly interrupted by a spike in the waveform that sharply rises and falls over a short time period. The spike in current values may be the result of electrical noise produced by another portion of circuit breaking system 130 or may be the result of some other event or condition. Notably, the sharp increase in current values and the subsequent sharp decrease in current values that disrupt the linearity of the waveform in graph 701 occurs over a period lasting approximately one quarter of one millisecond.

Graph 701 includes a first y-axis value limit and a second y-axis value limit, each of which are represented by a dotted line. Each of the first y-axis value limit and the second y-axis value limit represent threshold current values, that when exceeded, indicate that the current characteristics of the input signal have increased to levels associated with increased risk that may damage the motor load or other ancillary devices. As shown in graph 701, the first y-axis value limit is approximately nine-hundred amps per millisecond while the second y-axis value limit is approximately five-hundred amps per millisecond. In some cases, there may be a negative counterpart to either or both of the y-axis value limits, though such counterparts are not illustrated in Figure 7A for simplicity.

In some embodiments, of which the elements of Figure 7A represent an example, the first y-axis value limit corresponds to process that involves evaluating only instantaneous current values to determine if the current values exceed a threshold current. In such embodiments, the second y-axis value limit corresponds to process that involves evaluating instantaneous current values and rate of change values for the current values (i.e., current slope values), wherein to cause a trip of circuit breaking system 130, both the current values and the slope values must each exceed the respective thresholds for the entirety of the timing period.

Graph 702 illustrates rate of change values (i.e., slope values) for the waveform shown in graph 701. The linearity of the waveform in graph 701 between zero and just after eight milliseconds corresponds to a constant slope value shown in graph 702 for the same time period. Similarly, the linearity of the signal in graph 701 between approximately nine milliseconds to twenty milliseconds corresponds to a constant slope value shown in graph 702 for that time period. Graph 702 includes a y-axis value limit represented as a dotted line. The y-axis value limit represents a threshold slope value, that when exceeded, indicates that the current characteristics of the input signal have increased to levels associated with increased risk that may damage the motor load or other ancillary devices. As shown in graph 702, the y-axis value limit is approximately sixty amps per millisecond. In some cases, there may be a negative counterpart to the y-axis value limit, though such a counterpart is not illustrated in Figure 7A for simplicity.

The sharp upwards spike and sharp downwards spike in current values shown on graph 701 occurring just after eight milliseconds correspond to high positive and negative peak values for the slope shown in graph 702. In particular, the sharp increase corresponds to a significant increase in slope values that exceeds the threshold slope value. Note that in the current embodiment, there are two ways to achieve a trip of circuit breaking system 130. The first way a trip of circuit breaking system 130 is caused is where current values that exceed the first current threshold. Any current value detected that exceeds the first current threshold causes a trip of circuit breaking system 130, regardless of the time period for which the threshold is exceeded. The second way a trip of circuit breaking system 130 is caused is where current values exceed the second threshold current for the entire time period and the slope values exceed the threshold slope for the entire time period.

Graph 703 illustrates the state of circuit breaking system 130, wherein a value of zero indicates circuit breaking system 130 has not tripped while a value of one indicates circuit breaking system 130 has tripped. Graph 703 shows that at no point between zero and twenty milliseconds did circuit breaking system 130 trip. Neither of the potential paths to triggering a trip of circuit breaking system 130 are satisfied. First, at no point is the first current threshold exceeded. As such, the first path to triggering a trip of circuit breaking system 130 in the current embodiment will not result in a trip.

Second, while the current values exceed the second threshold current for the entire time period, the slope values do not exceed the threshold slope for the entire time period. As shown in graph 702, the slope values exceed the threshold slope value for a brief portion of the entire time window illustrated below the waveform. Because the current values and the slope values do not both exceed the respective thresholds for the full time period, no trip is caused and the waveform of graph 703 remains at zero.

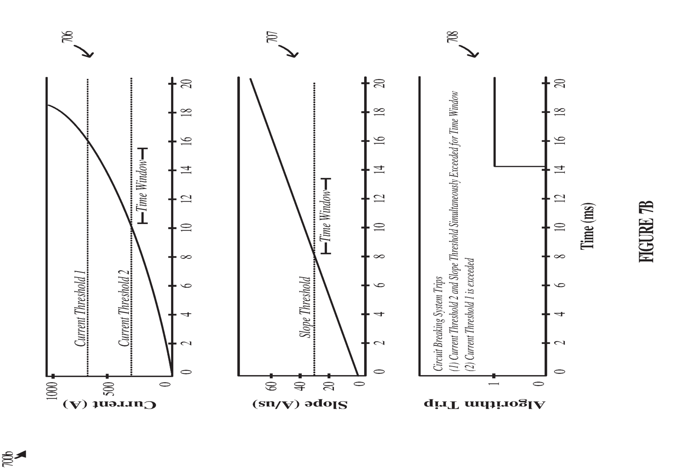

**Figure 7B** illustrates further signal plots 700b in accordance with some embodiments of the present technology. Figure 7B and the elements illustrated therein may be considered with respect to elements and techniques described in Figure 1 and Figure 2D, respectively. In particular, further signal plots 700b illustrates another example application of circuit breaking system 130 of Figure 2D in an operational environment, such as operational environment 100 of Figure 1.

Further signal plots 700b includes three different two-dimensional graphs having an x-axis and a y-axis, represented by graph 706, graph 707, and graph 708. Graph 706 includes an x-axis representative of the time domain and a y-axis representative of instantaneous current values for the input signal to a motor load, such as motor 120 of Figure 1. The current values for the y-axis of graph 706 ranges from zero amps to one thousand amps. Graph 707 includes an x-axis representative of the time domain and a y-axis representative of a rate of change for the current represented in graph 706 (i.e., the slope of the waveform shown in graph 706). The slope values of the y-axis of graph 707 are given in amps per millisecond and range from zero amps per millisecond to sixty amps per millisecond. Graph 708 includes an x-axis representative of the time domain and a y-axis that illustrates whether or not circuit breaking system 130 has undergone a trip (i.e., whether or not circuit breaking system 130 disrupts the flow of electrical energy to the motor load). The x-axis of each of graph 706, graph 707, and graph 708 is represented in millisecond and ranges from zero milliseconds to twenty milliseconds. Note that the graphical representations shown in Figure 7B are not necessarily drawn to scale.

Graph 706 illustrates a waveform representative of increasing current values associated with an input signal for driving a motor load (e.g., motor 120 of Figure 1). Graph 706 includes a first y-axis value limit and a second y-axis value limit, each of which are represented by a dotted line. Each of the first y-axis value limit and the second y-axis value limit represent threshold current values, that when exceeded, indicate that the current characteristics of the input signal have increased to levels associated with increased risk that may damage the motor load or other ancillary devices. As shown in graph 706, the first y-axis value limit is approximately six-hundred amps per millisecond while the second y-axis value limit is approximately three-hundred amps per millisecond. In some cases, there may be a negative counterpart to either or both of the y-axis value limits, though such counterparts are not illustrated in Figure 7B for simplicity.

In some embodiments, of which the elements of Figure 7B represent an example, the first y-axis value limit corresponds to process that involves evaluating only instantaneous current values to determine if the current values exceed a threshold current. In such embodiments, the second y-axis value limit corresponds to process that involves evaluating instantaneous current values and rate of change values for the current values (i.e., current slope values), wherein to cause a trip of circuit breaking system 130, both the current values and the slope values must each exceed the respective thresholds for the entirety of the timing period.

Graph 707 illustrates rate of change values (i.e., slope values) for the waveform shown in graph 706. Graph 707 includes a y-axis value limit represented as a dotted line. The y-axis value limit represents a threshold slope value, that when exceeded, indicates that the current characteristics of the input signal have increased to levels associated with increased risk that may damage the motor load or other ancillary devices. As shown in graph 707, the y-axis value limit is approximately thirty amps per millisecond. In some cases, there may be a negative counterpart to the y-axis value limit, though such a counterpart is not illustrated in Figure 7B for simplicity.

Note that in the current embodiment, there are two ways to achieve a trip of circuit breaking system 130, though in other embodiments there may be more or fewer ways to cause a trip of circuit breaking system 130. The first way a trip of circuit breaking system 130 in the current embodiment is caused is where current values exceed the first current threshold. Any current value detected that exceeds the first current threshold causes a trip of circuit breaking system 130, regardless of the time period for which the first current threshold is exceeded. The second way a trip of circuit breaking system 130 is caused is where current values exceed the second threshold current for the entire time period and the slope values exceed the threshold slope for the entire time period.

Graph 708 illustrates the state of circuit breaking system 130, wherein a value of zero indicates circuit breaking system 130 has not tripped while a value of one indicates circuit breaking system 130 has tripped. With regard to the first way to trigger a trip of circuit breaking system 130 in the current embodiment (current values exceed the first current threshold), as illustrated in graph 701, the waveform representing instantaneous current values begins to exceed the first current threshold at approximately sixteen milliseconds on the x-axis of graph 706. This event alone is sufficient to trigger a trip of circuit breaking system 130.

The second way to trigger a trip of circuit breaking system 130 in the current embodiment is caused where current values exceed the second threshold current for the entire time period and the slope values exceed the threshold slope for the entire time period. As illustrated in graph 701, the waveform representing instantaneous current values begins to exceed the second current threshold at just after ten milliseconds on the x-axis of graph 706. As further illustrated in graph 706, current values exceed the second current threshold for the entire time period as well as after the time period. Further, as illustrated in graph 707, slope values exceed the slope threshold at just after eight milliseconds on the x-axis of graph 707. As further illustrated in graph 707, current values exceed the slope threshold for the entire time period as well as after the time period.

Because the both the current values and the slope values exceed the respective thresholds for the time period, and because the current values and slope values simultaneously exceeded the respective thresholds for the time periods, graph 708 shows a trip of circuit breaking system 130 at just after fourteen milliseconds. Further, had the aforementioned events not occurred resulting in the trip denoted at just after fourteen milliseconds of graph 708, the fact that the current values of graph 706 exceed the first current threshold at approximately sixteen milliseconds on graph 706 would have independently resulted in a trip of circuit breaking system 130.

**Figure 7C** illustrates further method 700c in accordance with some embodiments of the present technology. The method steps of Figure 7C may be considered with respect to the elements and techniques of Figure 7A and Figure 7B, respectively. In particular, further method 700c illustrates the method steps associated with an example application of circuit breaking system 130 of Figure 2D in an operational environment such as operational environment 100 of Figure 1. For clarity, some of the arrows that indicate a possible outcome from a conditional step of further method 500b are shown as dotted lines.

To begin, a circuit breaking system (e.g., circuit breaking system 130 of Figure 1) executes a critical slope process, a critical current process, and a timing process, examples of which are given by critical slope 143, critical current 147, and timing 145, each of Figure 2D, respectively (step 705). In some embodiments, each of the critical slope process, critical current process, and timing process may be executable instructions that, when executed by a processor, such as processor 135 of Figure 1, direct the processor to act in accordance with each of the respective processes. The circuit breaking system queries a current sensor (e.g., current sensor 133 of Figure 2B) to obtain instantaneous current values associated with an input signal provided by a power supply (e.g., power supply 110 of Figure 1) in order to drive a motor load (e.g., motor 120 of Figure 1) (step 710).

At this point in further method 700c, two separate paths are illustrated. Each of the paths represents separate conditions that can result in a trip of the circuit breaking system. The first path corresponds to a first current threshold. Where current values obtained from the current sensor exceed the first current threshold, the circuit breaking system interrupts the flow of electrical energy to the motor load, thereby tripping the circuit breaking system. For example, the first current threshold may be greater than 15 times the nominal current draw of the load. The second path, which is made of two branches, corresponds to a second current threshold. The second current threshold is lower than the first current threshold and may be, for example, above a maximum rating for resistive loads. In order to cause a trip of the circuit breaking system via the second path, both branches of the second path must be satisfied.

Beginning with the first path, based on the current values obtained at step 710, the circuit breaking system determines if any of the current values exceed the first current threshold (step 755). In some embodiments, the first current threshold may be greater than 15 times the nominal current draw of the load. Where no current values exceed the first current threshold, the circuit breaking system continues to query the current sensor for current values to process and evaluate. Where the circuit breaking system identifies a current value that does exceed the first current threshold, the circuit breaking system interrupts the flow of electrical energy driving the motor load, thereby tripping the circuit breaking system (step 760).

Now turning the second path, and in particular the leftmost branch of second path, the circuit breaking system evaluates whether the current values returned from the current sensor in step 710 exceed the second current threshold (step 715). In some embodiments, the second current threshold may be greater than a maximum rating for resistive loads. Where the circuit breaking system determines that the current values returned from the current sensor in step 710 have not exceeded the second current threshold, the circuit breaking system continues to query the current sensor for instantaneous current values. Where, however, the circuit breaking system determines that current values have exceeded the second current threshold, the circuit breaking system begins timing a time period associated with the current values above the second current threshold (step 720). The time period may be, for example, between 4ms and 6ms. The circuit breaking system continues to evaluate the current values while timing the time period. Where the circuit breaking system determines that the current values have not only exceeded the second current threshold but exceeded the second current threshold for the entire time period, the first branch is successfully complete (step 725). Should the current values not exceed the threshold value for the entire time period, the circuit breaking system returns to querying the current sensor for current values to process.

Turning to the rightmost branch of further method 700c, the circuit breaking system determines slope values for the input signal based on the instantaneous current values obtained from the current sensor (step 730). The circuit breaking system evaluates whether the slope values exceed a threshold slope (step 735). The threshold slope may be, for example, between 40A/µs and 70A/µs. Where the circuit breaking system determines that the slope values have not exceeded the threshold slope, the circuit breaking system continues to query the current sensor for instantaneous current values from which to determine slope values. Where, however, the circuit breaking system determines that slope values have exceeded the threshold slope, the circuit breaking system begins timing a time period associated with the slope values above the threshold (step 740). The circuit breaking system continues to evaluate the slope values while timing the time period. Where the circuit breaking system determines that the slope values have not only exceeded the threshold slope but exceeded the threshold slope for the entire time period, the second branch is successfully complete (step 745). Should the slope values not exceed the threshold slope for the entire time period, the circuit breaking system returns to querying the current sensor for current values to process.

Where both the left and right branches of the second path have successfully been completed (i.e., the outcomes of both step 725 and step 745 are *YES*)*,* the circuit breaking system then determines whether the slope values and current values have exceeded the respective thresholds simultaneously (step 750). Where the circuit breaking system determines that the current values and slope values were not simultaneously above the respective thresholds, each for respective time periods, the circuit breaking system returns to querying the current sensor for current values to process. Where the circuit breaking system determines that the current values and slope values were simultaneously above the respective thresholds, each for the entire time period, the circuit breaking system interrupts the flow of electrical energy to the motor load, thereby tripping the circuit breaking system (step 760).

**Figure** 8 illustrates computing system 805 used in accordance with some embodiments of the present technology. Computing system 805 is generally representative of a computing device sufficient to execute circuit breaking processes 835. In some embodiments, computing system 805 is representative of an industrial controller.

Computing system 805 is representative of a computing device sufficient to execute software and communicate with peripherals. Computing system 805 is representative of any system or collection of systems with which the various operational architectures, processes, scenarios, and sequences disclosed herein. Computing system 805 may be implemented as a single apparatus, system, or device or may be implemented in a distributed manner as multiple apparatuses, systems, or devices. Computing system 805 includes, but is not limited to, processing system 825, storage system 810, software 815, communication interface system 820, and user interface system 830. Processing system 825 is operatively coupled with storage system 810, communication interface system 820, and user interface system 830. Computing system 805 may be representative of a cloud computing device, distributed computing device, or the like.

Processing system 825 loads and executes software 815 from storage system 810. Software 815 includes and implements circuit breaking processes 835. When executed by processing system 825 to provide circuit breaking processes 835, software 815 directs processing system 825 to operate as described herein for at least the various processes, operational scenarios, and sequences discussed in the foregoing implementations. Computing system 805 may optionally include additional devices, features, or functionality not discussed for purposes of brevity.

Processing system 825 may include a microprocessor and other circuitry that retrieves and executes software 815 from storage system 810. Processing system 825 may be implemented within a single processing device but may also be distributed across multiple processing devices or sub-systems that cooperate in executing program instructions. Examples of processing system 825 include general purpose central processing units, graphical processing units, application specific processors, and logic devices, as well as any other type of processing device, combinations, or variations thereof.

Storage system 810 may include any computer readable storage media readable by processing system 825 and capable of storing software 815. Storage system 810 may include volatile and nonvolatile, removable, and non-removable media implemented in any method or technology for storage of information, such as computer readable instructions, data structures, program modules, or other data. Examples of storage media include random access memory, read only memory, magnetic disks, optical disks, optical media, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations, storage system 810 may also include computer readable communication media over which at least some of software 815 may be communicated internally or externally. Storage system 810 may be implemented as a single storage device but may also be implemented across multiple storage devices or sub-systems co-located or distributed relative to each other. Storage system 810 may include additional elements, such as a controller capable of communicating with processing system 825 or other systems.

Software 815 (including circuit breaking processes 835) may be implemented in program instructions and, when executed by processing system 825, can direct processing system 825 to operate as described with respect to the various operational scenarios, sequences, and processes illustrated herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 815 may include additional processes, programs, or components, such as operating system software, virtualization software, or other application software. Software 815 may also include firmware or some other form of machine-readable processing instructions executable by processing system 825.

In general, software 815 may, when loaded into processing system 825 and executed, transform a suitable apparatus, system, or device (of which computing system 805 is representative) overall from a general-purpose computing system into a special-purpose computing system customized to provide circuit breaking processes 835 as described herein. Indeed, encoding software 815 on storage system 810 may transform the physical structure of storage system 810. The specific transformation of the physical structure may depend on various factors in different implementations of this description. Examples of such factors may include, but are not limited to, the technology used to implement the storage media of storage system 810 and whether the computer-storage media are characterized as primary or secondary storage, as well as other factors.

For example, if the computer readable storage media are implemented as semiconductor-based memory, software 815 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 820 may include communication connections and devices that allow for communication with other computing systems (not shown) over communication networks (not shown). Examples of connections and devices that together allow for inter-system communication may include network interface cards, antennas, power amplifiers, radiofrequency circuitry, transceivers, and other communication circuitry. The connections and devices may communicate over communication media to exchange communications with other computing systems or networks of systems, such as metal, glass, air, or any other suitable communication media. The media, connections, and devices are well known and need not be discussed at length here.

Communication between computing system 805 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of networks, or variation thereof. The communication networks and protocols are well known and need not be discussed at length here.

An exemplary system claim associated with embodiments described herein and particularly related to those described with respect to Figures 7A - 7C may include a circuit breaking system, comprising: a current sensor configured to measure a current draw of a load coupled to the circuit breaking system; one or more processors; and one or more memories storing components executable by the one or more processors, the components comprising: a critical current threshold component configured to trip the circuit breaking system based on the current draw exceeding a first current threshold, and a critical slope threshold component configured to: calculate a slope of the current draw, the slope defining a change in the current draw over time; and trip the circuit breaking system based on the slope exceeding a slope threshold and the current draw exceeding a second current threshold simultaneously for a predetermined time period, wherein the second current threshold is less than the first current threshold.

Dependent claims associated with the above exemplary system claim may include the circuit breaking system, wherein the first current threshold is greater than fifteen times a nominal current draw of the load. Another example may include the circuit breaking system, wherein the second current threshold is above a maximum rating for resistive loads. Another example may include the circuit breaking system, wherein the load is a motor. Another example may include the circuit breaking system, further comprising: a sensor configured to provide voltage values proportional to the slope of the current draw of the load coupled to the circuit breaking system, wherein the critical slope threshold component is further configured to calculate the slope based on the voltage values.

While some examples provided herein are described in the context of an industrial environment, it should be understood that the systems and methods described herein are not limited to such embodiments and may apply to a variety of other industrial environments and their associated systems. As will be appreciated by one skilled in the art, aspects of the present invention may be embodied as a system, method, computer program product, and other configurable systems. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words in the above Detailed Description using the singular or plural number may also include the plural or singular number, respectively. The word "or," in reference to a list of two or more items, covers all of the following interpretations of the word: any of the items in the list, all of the items in the list, and any combination of the items in the list.

The phrases "in some embodiments," "according to some embodiments," "in the embodiments shown," "in other embodiments," and the like generally mean the particular feature, structure, or characteristic following the phrase is included in at least one implementation of the present technology and may be included in more than one implementation. In addition, such phrases do not necessarily refer to the same embodiments or different embodiments.

The above Detailed Description of examples of the technology is not intended to be exhaustive or to limit the technology to the precise form disclosed above. While specific examples for the technology are described above for illustrative purposes, various equivalent modifications are possible within the scope of the technology, as those skilled in the relevant art will recognize. For example, while processes or blocks are presented in a given order, alternative implementations may perform routines having steps, or employ systems having blocks, in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed or implemented in parallel or may be performed at different times. Further any specific numbers noted herein are only examples: alternative implementations may employ differing values or ranges.

The teachings of the technology provided herein can be applied to other systems, not necessarily the system described above. The elements and acts of the various examples described above can be combined to provide further implementations of the technology. Some alternative implementations of the technology may include not only additional elements to those implementations noted above, but also may include fewer elements.

These and other changes can be made to the technology in light of the above Detailed Description. While the above description describes certain examples of the technology, and describes the best mode contemplated, no matter how detailed the above appears in text, the technology can be practiced in many ways. Details of the system may vary considerably in its specific implementation, while still being encompassed by the technology disclosed herein. As noted above, particular terminology used when describing certain features or aspects of the technology should not be taken to imply that the terminology is being redefined herein to be restricted to any specific characteristics, features, or aspects of the technology with which that terminology is associated. In general, the terms used in the following claims should not be construed to limit the technology to the specific examples disclosed in the specification, unless the above Detailed Description section explicitly defines such terms. Accordingly, the actual scope of the technology encompasses not only the disclosed examples, but also all equivalent ways of practicing or implementing the technology under the claims.

To reduce the number of claims, certain aspects of the technology are presented below in certain claim forms, but the applicant contemplates the various aspects of the technology in any number of claim forms. For example, while only one aspect of the technology is recited as a computer-readable medium claim, other aspects may likewise be embodied as a computer-readable medium claim, or in other forms, such as being embodied in a means-plus-function claim. Any claims intended to be treated under 35 U.S.C. § 112(f) will begin with the words "means for" but use of the term "for" in any other context is not intended to invoke treatment under 35 U.S.C. § 112(f). Accordingly, the applicant reserves the right to pursue additional claims after filing this application to pursue such additional claim forms, in either this application or in a continuing application.

## Claims

1. A method of distinguishing between inrush current and short circuit current, the method comprising:
prior to startup of a motor, setting a current threshold of a circuit breaking device to exceed an expected inrush current value;
based on expiration of an inrush time window after the startup of the motor, lowering the current threshold of the circuit breaking device to a runtime threshold value;
measuring, upon the startup of the motor, a current draw of the motor at the circuit breaking device; and
in response to the measured current draw exceeding the current threshold, tripping the circuit breaking device.

2. The method of claim 1, further comprising:
supplying the motor with a pulse of electrical energy;
measuring, in response to the pulse, an inrush current draw of the motor; and
determining, based at least in part on the inrush current draw, the expected inrush current value.

3. The method of claim 1 or 2, wherein:
setting the current threshold of the circuit breaking device to exceed the expected inrush current value comprises setting the expected inrush current value to an application specific value; and
the application specific value is based at least in part on one or more characteristics of the motor, one or more characteristics of an application of the motor, or a combination thereof.

4. The method of one of claims 1 to 3, wherein setting the current threshold of the circuit breaking device to exceed the expected inrush current value comprises setting the current threshold to a default expected inrush current value.

5. The method of one of claims 1 to 4, wherein lowering the current threshold of the circuit breaking device to the runtime threshold value comprises setting the current threshold to a default runtime value.

6. A method of distinguishing between inrush current and short circuit current, the method comprising:
measuring a current draw of a motor at a circuit breaking device;
calculating a slope of the current draw defining a change in the current draw over time; and
tripping the circuit breaking device based at least in part on detecting the slope of the current draw exceeds a slope threshold for a predetermined time period.

7. The method of claim 6, wherein the tripping the circuit breaking device is further based at least in part on detecting the current draw exceeds a current threshold for the predetermined time period.

8. The method of claim 7, wherein the current threshold is greater than five times a nominal current draw of the motor.

9. The method of one of claims 6 to 8, wherein:
the motor is driven by a multi-phase input signal;
measuring the current draw of the motor at the circuit breaking device comprises measuring a phase-specific current draw for each phase of the multi-phase input signal;
calculating the slope of the current draw comprises calculating a phase-specific slope for each phase-specific current draw; and
detecting the slope of the current draw exceeds the slope threshold comprises detecting the slope of the phase-specific current draw of one or more phases of the multi-phase input signal exceeds the slope threshold.

10. The method of claim 9, wherein:
detecting the slope of the current draw exceeds the slope threshold comprises detecting the slope of the phase-specific current draw of at least two phases of the multi-phase input signal exceeds the slope threshold.

11. A method of distinguishing between inrush current and short circuit current, the method comprising:
measuring a current draw of a motor at a circuit breaking device;
calculating a slope of the current draw defining a change in the current draw over time; and
tripping the circuit breaking device based at least in part on detecting the slope of the current draw exceeds a slope threshold and the current draw exceeds a current threshold simultaneously.

12. The method of claim 11, wherein the current threshold is greater than five times a nominal current draw of the motor.

13. The method of claim 11 or 12, wherein:
the motor is driven by a multi-phase input signal;
measuring the current draw of the motor at the circuit breaking device comprises measuring a phase-specific current draw for each phase of the multi-phase input signal;
calculating the slope of the current draw comprises calculating a phase-specific slope for each phase-specific current draw; and
detecting the slope of the current draw exceeds the slope threshold comprises detecting the slope of the phase-specific current draw of one or more phases of the multi-phase input signal exceeds the slope threshold.

14. The method of claim 13, wherein:
detecting the slope of the current draw exceeds the slope threshold comprises detecting the slope of the phase-specific current draw of at least two phases of the multi-phase input signal exceeds the slope threshold.

15. The method of one of claims 11 to 14, wherein:
the circuit breaking device comprises one or more noise removal filters; and
measuring the current draw of the motor at the circuit breaking device comprises:
filtering a current draw signal with the one or more noise removal filters, and
determining, subsequent to the filtering, the current draw from the current draw signal.
